# EUROPEAN PATENT APPLICATION

(11) **EP 4 614 640 A1**
(43) Date of publication of application: **10.09.2025**
(21) Application number: 25153721.3
(22) Date of filing: 24.01.2025
(51) Int. Cl.: H01M 10/052, H01M 10/0565, H01M 10/0567, H01M 10/0568, H01M 10/0569

(54) **GEL ELECTROLYTE FOR LITHIUM SECONDARY BATTERY AND LITHIUM SECONDARY BATTERY INCLUDING THE SAME**

(30) Priority: 25.01.2024 KR 20240011719
(71) Applicant: SAMSUNG SDI CO., LTD., Yongin-si, Gyeonggi-do 17084 (KR)
(72) Inventor: Kim, Soojin, 17084 Gyeonggi-do (KR); Bae, Woojin, 17084 Gyeonggi-do (KR); Kim, Seulwoo, 17084 Gyeonggi-do (KR); Park, Jongseok, 17084 Gyeonggi-do (KR); Kim, Dongyoung, 17084 Gyeonggi-do (KR); Suh, Seungbum, 17084 Gyeonggi-do (KR); Yeon, Donghee, 17084 Gyeonggi-do (KR); Moon, Jongseok, 17084 Gyeonggi-do (KR)
(74) Representative: Michalski Hüttermann & Partner Patentanwälte mbB

(57) **Abstract**

A lithium secondary battery including a gel polymer electrolyte. The gel polymer electrolyte includes a gel polymer and a liquid electrolyte, wherein the gel polymer is i) a crosslinked product of a multifunctional acryl-based monomer having three or more polymerizable functional groups, or ii) a crosslinked product of a first polymerizable monomer and a second polymerizable monomer, wherein the first polymerizable monomer is a multifunctional acryl-based monomer having three or more polymerizable functional groups, and the second polymerizable monomer is at least one selected from among a urethane acryl-based monomer having two or more polymerizable functional groups and a polymerizable monomer including a perfluoropolyether (PFPE) unit and having two or more polymerizable functional groups, and the liquid electrolyte includes a lithium salt, an organic solvent, and acetonitrile.

## Description

### BACKGROUND

### 1. Field

Embodiments of the present disclosure described herein are related to a gel electrolyte for a lithium secondary battery and a lithium secondary battery including the same.

### 2. Description of the Related Art

Lithium secondary batteries mainly use carbon-based anode active materials such as graphite. Carbon-based anode active materials have no (or no significant or substantial) change in volume during charging and discharging, and thus may have relatively high stability in lithium secondary batteries. However, due to their small capacity, anode active materials with high capacity may be desired or required (instead).

In this regard, as an anode active material, lithium metal with a much or substantially greater theoretical electrical capacity than that of the carbon-based anode active material may be used or considered.

However, lithium metal causes side reactions with an electrolyte during charging and discharging, giving rise to the formation of lithium dendrites on the surface of the lithium metal and growth of the lithium dendrites. Accordingly, a short circuit may be caused between a cathode and an anode, resulting in the degradation of lifespan characteristics of a lithium second battery including the lithium metal.

Methods using solid electrolytes with relatively high modulus and high mobility of lithium ions have been suggested or pursued to control lithium dendrites.

However, among solid electrolytes, polymer solid electrolytes have low ion conductivity at room temperature, and thus putting them into practical use is difficult. Also, among solid electrolytes, gel polymer electrolytes are easy to manufacture and have good or suitable electrochemical performance, but their ion transfer rate does not reach a satisfactory level, thus requiring or desiring further improvement or innovation.

### SUMMARY

Aspects according to one or more embodiments are directed toward a gel polymer electrolyte for a lithium secondary battery in which mobility of lithium ions is improved due to a polymer therein.

Aspects according to one or more embodiments are directed toward a lithium secondary battery including the gel polymer electrolyte.

Additional aspects will be set forth in part in the description which follows and, in part, will be apparent from the description, or may be learned by practice of the presented embodiments of the present disclosure.

According to one or more embodiments, a gel polymer electrolyte for a lithium secondary battery includes a gel polymer and a liquid electrolyte,
wherein the gel polymer is
   i) a crosslinked product of a multifunctional acryl-based monomer having three or more polymerizable functional groups, or
   ii) a crosslinked product of a first polymerizable monomer and a second polymerizable monomer, where the first polymerizable monomer is a multifunctional acryl-based monomer having three or more polymerizable functional groups, and the second polymerizable monomer is at least one selected from among a urethane acryl-based monomer having two or more polymerizable functional groups and a polymerizable monomer including a perfluoropolyether (PFPE) unit and having two or more polymerizable functional groups, and
wherein the liquid electrolyte includes a lithium salt, an organic solvent, and acetonitrile.

According to one or more embodiments, a lithium secondary battery includes an anode including an anode current collector, a cathode, and an electrolyte arranged between the cathode and the anode, wherein the electrolyte includes the gel polymer electrolyte.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram for explaining a laminated structure of a lithium secondary battery according to one or more embodiments;
FIG. 2 is a diagram for explaining a laminated structure of a lithium secondary battery according to one or more embodiments;
FIG. 3 is a diagram for explaining a laminated structure of a lithium secondary battery according to one or more embodiments;
FIG. 4 is a schematic view of a lithium secondary battery according to one or more embodiments;
FIG. 5 is a schematic view of a lithium battery according to one or more embodiments;
FIG. 6 is a schematic view of a lithium battery according to one or more embodiments;
FIG. 7 is a scanning electron microscope (SEM) image obtained by observing lithium electrodeposition in a lithium secondary battery according to Examples; and
FIG. 8 is an SEM image obtained by observing lithium electrodeposition in a lithium secondary battery according to Comparative Examples.

### DETAILED DESCRIPTION

Reference will now be made in more detail to one or more embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, one or more embodiments are merely described in more detail, by referring to the drawings, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

The present disclosure described hereinbelow may have one or more suitable modifications and many embodiments, and in this regard, example embodiments will be illustrated in the drawings and more fully described. The present disclosure may, however, should not be construed as being limited to the example embodiments set forth herein, and rather, should be understood as covering all modifications, equivalents, or alternatives falling within the scope of the present disclosure.

Terms as used herein are for the purpose of describing particular embodiments only, and are not intended to be limiting the present disclosure. An expression used in the singular encompasses an expression of the plural, unless it has a clearly different meaning in the context. It will be further understood that the terms "comprises" and/or "comprising," or "includes" and/or "including" if used in this specification, may specify the presence of stated features, regions, integers, steps, operations, elements, and/or components, but may not preclude the presence or addition of one or more other features, regions, integers, steps, operations, elements, components, and/or groups thereof. As used herein, "/" may be interpreted as "and" or as "or," depending on the context.

As utilized herein, expressions such as "at least one of', "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously)a and b, both (e.g., simultaneously) a and c, both (e.g., simultaneously) b and c, all of a, b, and c, or variations thereof.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the drawings, thicknesses may be magnified or exaggerated to clearly illustrate one or more suitable layers and regions. Like reference numbers may refer to like elements throughout, and duplicative descriptions thereof may not be provided in the drawings and in the following description. It will be understood that if one element, layer, film, section, sheet, and/or the like is referred to as being "on" another element, it can be directly on the other element or intervening elements may be present therebetween. Although the terms "first," "second," and/or the like may be used herein to describe one or more suitable elements, these elements should not be limited by these terms. These terms are only used to distinguish one element from another element. In the present specification and drawings, components having substantially the same functional features are referred to the same reference numerals, and thus repeated descriptions will not be provided.

Unless otherwise specified herein, it will be understood that if one layer, film, section, sheet, and/or the like is referred to be "on" another element, it includes not only a case where one layer, film, section, sheet, and/or the like is "directly on" another element, but also a case where intervening elements are present therebetween.

Unless otherwise specified herein, the singular may also include the plural. Also, unless otherwise specified herein, the expression "A or B" may have a meaning that "A may be included, B may be included, or both (e.g., simultaneously) A and B may be included."

The expression "a combination thereof" as used herein may refer to mixtures, stacks, composites, copolymers, alloys, blends, reaction products, and/or the like.

Unless otherwise defined herein, the term "particle diameter" may refer to an average particle diameter. Also, the term "particle diameter" may refer to an average particle diameter D50 which is a diameter of particles with a cumulative volume of 50 volume% in a particle size distribution. The average particle diameter D50 may be measured by methods used by those skilled in the art. For example, it may be measured by using a particle size analyzer or through images obtained by a transmission electron microscope or a scanning electron microscope. According to one or more embodiments, the measurement may be performed by using a measuring device using a dynamic light-scattering method, and through data analysis, the number of particles for each particle size range may be counted to calculate the average particle diameter D50 value. According to one or more embodiments, the measurement may be performed according to a laser diffraction method. According to one or more embodiments, at the time of measurement according to the laser diffraction method, particles to be measured may be dispersed in a dispersion medium, and then introduced into a commercially available laser diffraction particle diameter measuring device (e.g., MT 3000 by Microtrac Company). After irradiating with about 60 W of ultrasonic waves at about 28 kHz, the average particle diameter D50 based on about 50 % of the particle diameter distribution in the measuring device may be calculated.

As used in the present disclosure, the term "particle diameter" of a particle may refer to an average particle diameter for a spherical particle, and may refer to an average major axis length for a non-spherical particle. The particle diameter of a particle may be measured by using a particle size analyzer (PSA). The term "particle diameter' of a particle may refer to, for example, an average particle diameter. The average particle diameter may be, for example, a median particle diameter D50. The median particle diameter D50 may be a particle size corresponding to an about 50 % cumulative volume calculated from particles having a small particle size in a particle size distribution measured according to, for example, the laser diffraction method. The average particle diameter and average major axis length of particles may be measured by using a scanning electron microscope. If the size of the particles is measured by using a scanning electron microscope, the size of particles may be determined by the average value of at least 30 randomly extracted particles of about 1 µm or more excluding differentials.

In the present disclosure, the term "metal" may include both (e.g., simultaneously) a metal and a metalloid, such as silicon and germanium, in an elemental state or an ionic state, and the term "alloy" may refer to a mixture of two or more metals.

In the present disclosure, the term "cathode active material" may refer to a cathode material that can undergo lithiation and delithiation, and the term "anode active material" may refer to an anode active material that can undergo lithiation and delithiation.

In the present disclosure, the terms "lithiation" and "lithiating" may refer to a process of adding lithium to a cathode active material or an anode active material, and the terms "delithiation" and "delithiating" may refer to a process of removing lithium from a cathode active material or an anode active material.

In the present disclosure, the terms "charging" and "charge" may refer to a process of providing electrochemical energy to a battery, and the terms "discharging" and "discharge" may refer to a process of removing electrochemical energy from a battery.

In the present disclosure, the terms "positive electrode" and "cathode" may refer to an electrode where electrochemical reduction and lithiation occur during a discharging process, and the terms "negative electrode" and "anode" may refer to an electrode where electrochemical oxidation and delithiation occur during a discharging process.

Hereinafter, a gel polymer electrolyte for a lithium secondary battery and a lithium secondary battery including the same according to example embodiments will be described in more detail.

An anodeless lithium secondary battery may be a battery using an anode current collector alone without an anode active material layer. In this regard, lithium ions transferred from a cathode during charging may be plated on a surface of an anode current collector, and lithium plated on the surface of the anode current collector dissolves again and intercalates into the cathode during discharging, thereby driving a battery.

In such an anodeless lithium secondary battery, a lithium metal that is generally used as an anode active material is omitted, and thus energy density per volume or per weight of the battery may be maximized or increased. However, a lithium metal plated during a driving process gives rise to growth of lithium dendrites due to a substantially non-uniform current crowding phenomenon during oxidation/reduction processes. The lithium dendrites may not only degrade capacity and lifespan characteristics of the battery by causing loss of a lithium anode, but also causes safety issues due to a short circuit caused at an anode and a cathode.

Methods using solid electrolytes with high modulus and high ion mobility have been suggested to control the lithium dendrites.

However, among solid electrolytes, a solid polymer electrolyte may have low ion conductivity at room temperature, and a solid ceramic electrolyte may be difficult to manufacture and handle, and thus is difficult to put it into practical use. In comparison, a gel polymer electrolyte among the solid electrolytes may be easy to manufacture and have excellent or suitable electrochemical performance, but have insufficient ion transfer rate of lithium ions, resulting in poor rate characteristics, or may not be driven at room temperature at all, thus requiring or desiring further improvement or innovation.

In this regard, to solve the aforementioned problems, the present disclosure focuses on the distribution and movement of lithium ions in a polymer chain by including a material that transfers cations and anions of lithium to the polymer chain, thereby providing a gel polymer electrolyte for a lithium secondary battery with improved mobility of lithium ions within the polymer chain.

The gel polymer electrolyte for a lithium secondary battery according to one or more embodiments may be a gel polymer electrolyte for a lithium secondary battery including: a gel polymer; and a liquid electrolyte. The gel polymer may be: i) a crosslinked product of a multifunctional acryl-based monomer having three or more polymerizable functional groups; or ii) a crosslinked product of a first polymerizable monomer and a second polymerizable monomer, wherein the first polymerizable monomer may be a multifunctional acryl-based monomer having three or more polymerizable functional groups, and the second polymerizable monomer may be at least one selected from among a urethane acryl-based monomer having two or more polymerizable functional groups and a polymerizable monomer including a perfluoropolyether (PFPE) unit and having two or more polymerizable functional groups, and the liquid electrolyte may include a lithium salt, an organic solvent, and acetonitrile.

In the gel polymer electrolyte according to one or more embodiments, acetonitrile may transfer an anion of lithium salt to the polymer chain together with lithium cations of lithium salt, thereby intensively distributing lithium ions in the polymer chain. Acetonitrile may be a neutral molecule with improved interactions with an anion of lithium salt as well as with a lithium cation of lithium salt. If the gel polymer electrolyte formed by using the liquid electrolyte including acetonitrile is used, a lithium secondary battery including the gel polymer electrolyte having improved capacity, long lifespan, and reduced resistance may be provided.

According to one or more embodiments, the amount of acetonitrile may be, based on 100 parts by weight (e.g., 100 wt% of) of a total weight of the electrolyte, in a range of about 2 wt% to about 30 wt%, about 3 wt% to about 20 wt%, or about 3 wt% to about 10 wt%. If the amount of acetonitrile is within these ranges, the interactions with lithium cations and anions of lithium salt may be excellent or suitable, thereby capable of providing the gel polymer electrolyte with improved mobility of lithium ions.

In a lithium secondary battery according to one or more embodiments, acetonitrile may transfer lithium ions to the polymer chain, allowing the lithium ions to be transferred only through the polymer chain, and if the lithium ions are uniformly (e.g., substantially uniformly) transferred to an anode, the formation of lithium dendrites may be prevented or reduced effectively.

If acetonitrile is not added to the gel polymer electrolyte according to one or more embodiments, the lithium ions may be transferred through not only the polymer chain, but also the liquid electrolyte, and accordingly, the lithium ions may be partially concentrated and lithium dendrites may be formed.

According to one or more embodiments, the organic solvent may include a carbonate-based compound, and the carbonate-based compound may include fluoroethylene carbonate (FEC) and diethyl carbonate (DEC). The amount of the carbonate-based compound may be in a range of about 5 wt% to about 45 wt% based on (100 wt% of) a total weight of the liquid electrolyte. For example, the amount of the carbonate-based compound may be in a range of about 10 wt% to about 45 wt%, about 15 wt% to about 45 wt%, about 20 wt% to about 45 wt%, or about 20 wt% to about 40 wt%, based on (100 wt% of) a total weight of the liquid electrolyte.

According to one or more embodiments, the mixing ratio of the FEC to the DEC in the carbonate-based compound may be in a range of about 1:10 to about 1:1, about 1:8 to about 1:1, about 1:5 to about 1:1, or about 1:3 to about 1:1.

According to one or more embodiments, the gel polymer electrolyte may be formed in a semi-solid phase by confining liquid in a polymer matrix obtained through polymerization. If, as a polymerizable monomer (cross-linkable monomer) for preparing the polymer matrix, a monomer with strong affinity for lithium cations and a monomer with strong affinity for anions of lithium salt are used to prepare the gel polymer electrolyte, the lithium cations and anions of lithium salt may be intensively distributed in the polymer chain, and may be easily moved between ion-binding sites in the polymer chain with the help of low-molecular-weight liquid molecules. In this regard, the overall lithium movement may not be divided into two phases, a liquid phase and a polymer phase, and because the lithium ions may move through the polymer chain, lithium may be uniformly (e.g., substantially uniformly) electrodeposited on the anode current collector, and lithium may be accordingly transferred to the anode current collector at a substantially uniform concentration without an increase in dendritic lithium plating, resulting in substantially uniform electrodeposition of lithium.

The multifunctional acryl-based monomer having three or more polymerizable functional groups, the first polymerizable monomer, and the second polymerizable monomer may have strong affinity for cations and anions of lithium, and thus the gel polymer electrolyte obtained therefrom may facilitate movement of lithium ions through the polymer chain. In this regard, use of the gel polymer electrolyte may lead to preparation of a lithium secondary battery having improved lifespan characteristics. The cations and anions of lithium may be derived from a lithium salt, and for example, if LiPF₆ is used as a lithium salt, an anion may be, for example, PF₆₋.

The gel polymer electrolyte according to one or more embodiments may be prepared by using a composition for providing a gel polymer electrolyte. The composition for providing a gel polymer electrolyte may include a polymerizable monomer for providing a gel polymer, a liquid electrolyte, and an initiator.

The initiator may be, for example, benzoyl peroxide, di-tert-butyl peroxide, dibenzoyl peroxide, azobisdisobutyronitrile, 1,1'-azodi(hexahydrobenzonitrile), 2,2'-azodi(2-methylbutyronitrile), or any combination thereof.

If the gel polymer electrolyte is formed by using the liquid electrolyte including the polymerizable monomer and acetonitrile according to one or more embodiments, a large amount of lithium ions may move and exist around the gel polymer formed from the polymerizable monomer, thereby increasing the transfer rate of lithium movement. According to one or more embodiments, the lithium ions may be uniformly (e.g., substantially uniformly) arranged on the anode, so that the formation of lithium dendrites may be effectively prevented or reduced.

The multifunctional acryl-based monomer having three or more polymerizable functional groups and the multifunctional acryl-based monomer having a urethane group may have strong interactions with lithium cations (Li+) and anions of lithium salt, and thus the lithium cation ions may be transferred through the polymer chain while the anions of lithium salt may be trapped, resulting in a significant increase in the lithium cation (Li+) transference number. The lithium cations and the anions of lithium salt may be, for example, cations and anions of a lithium salt, respectively. If LiPF₆ is used as a lithium salt, an anion may be, for example, PF₆⁻.

The gel polymer electrolyte for a lithium secondary battery according to one or more embodiments may be a gel polymer electrolyte for a lithium secondary battery including a gel polymer and a liquid electrolyte, wherein the gel polymer may be: i) a crosslinked product of a multifunctional acryl-based monomer having three or more polymerizable functional groups; or ii) a crosslinked product of a first polymerizable monomer and a second polymerizable monomer, wherein the first polymerizable monomer may be a multifunctional acryl-based monomer having three or more polymerizable functional groups, and the second polymerizable monomer may be at least one selected from among a urethane acryl-based monomer having two or more polymerizable functional groups and a polymerizable monomer including a PFPE unit and having two or more polymerizable functional groups. The liquid electrolyte may include a lithium salt, an organic solvent, and acetonitrile.

The gel polymer may be i) a crosslinked product of a polymerizable functional group having three or more polymerizable functional groups; or ii) a crosslinked product of a first polymerizable monomer and a second polymerizable monomer, wherein the first polymerizable monomer may be a multifunctional acryl-based monomer having three or more polymerizable functional groups, and the second polymerizable monomer may be at least one selected from among a urethane acryl-based monomer having two or more polymerizable functional groups and a polymerizable monomer including a PFPE unit and having two or more polymerizable functional groups.

The multifunctional acryl-based monomer having three or more polymerizable functional groups may have, for example, three or more polymerizable functional groups, for example, three to six polymerizable functional groups. In the presence of three or more functional groups in the first polymerizable monomer that is a multifunctional acrylic-based monomer, the gel polymer electrolyte having excellent or suitable physical properties may be obtained. Such a polymerizable monomer may include, for example, pentaerythritol tetraacrylate, pentaerythritol tetramethaacrylate, trimethylolpropane triacrylate, trimethylolpropane trimethaacrylate (TMPTMA), propoxylated(3) trimethylolpropane triacrylate (PO(3)TMPTA), propoxylated(6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl)isocyanurate (THEICTA), dipentaerythritol pentaacrylate (DPEPA),dipentaerythritol hexaacrylate (DPHA), and/or a (e.g., any suitable) combination thereof.

According to one or more embodiments, the urethane-acryl-based monomer having two or more functional groups may include two or more units represented by Formula 1: 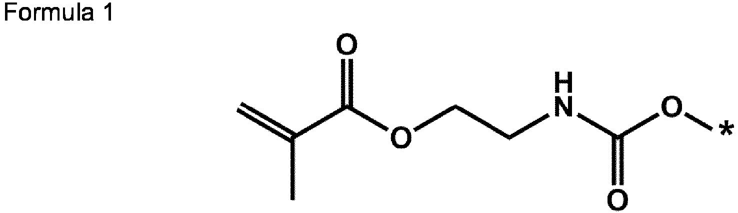 wherein, in Formula 1,
* indicates a binding site to an adjacent atom.

According to one or more embodiments, the urethane acryl-based monomer having two or more functional groups may include Compound: 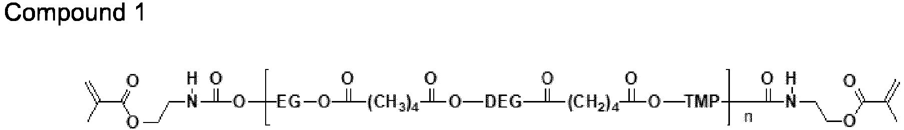 wherein in Compound 1, n may be an integer from 1 to 100, EG may be an ethylene group, DEG may be diethylene glycol, and TMP may be trimethylolpropane.

Considering that the urethane acryl-based monomer having two or more functional groups has high mechanical strength and elasticity due to a urethane moiety included therein, use of the urethane acrylic-based monomer as a second polymerizable monomer to form a crosslinked product with the first polymerizable monomer may result in the preparation of the gel polymer electrolyte having high mechanical strength and elasticity.

For use as the second polymerizable monomer, a urethane-containing multifunctional acryl-based monomer and other monomers including a multifunctional group having a similar structure with the urethane-containing multifunctional acryl-based monomer may be additionally mixed. The other monomers including a multifunctional group may include, for example, at least one selected from the group consisting of urethane acrylate methacrylate, urethane epoxy methacrylate, and commercially available N3DE180 and N3DF230 produced by Satomer of the Arkema company.

If the urethane-containing multifunctional acrylic-based monomer is used as a polymerizable monomer, it may act as a diluent in the electrolyte, and in this regard, the viscosity of the composition for providing a gel polymer electrolyte may reduce. The viscosity of the composition for providing a gel polymer electrolyte may be in a range of about 4 cps to about 10 cps. In this regard, using the composition having this viscosity may facilitate injection into the battery structure.

According to one or more embodiments, the polymerizable monomer including the PFPE unit and having two or more polymerizable functional groups may include a unit represented by Formula 2 and three or more units represented by Formula 3: 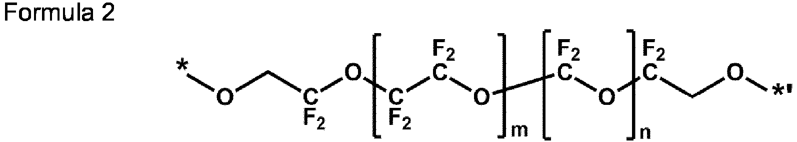 wherein in Formula 2,
* and *' may each indicate a binding site to an adjacent atom,
m and n may each be greater than 0, and the sum of m and n may be in a range of 2 to 300, and 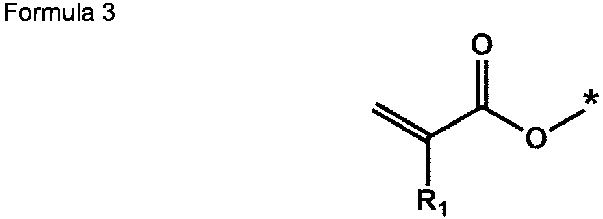
in Formula 3,
R₁ may be hydrogen or a C₁-C₆ alkyl group, and * may be a binding site to a neighboring atom.

According to one or more embodiments, the polymerizable monomer containing the PFPE unit and having two or more polymerizable functional groups may have excellent or suitable ion (ionic) conductivity due to inclusion of the PFPE unit. For example, the polymerizable monomer containing the PFPE unit and having two or more polymerizable functional groups may include a compound represented by Formula 4: 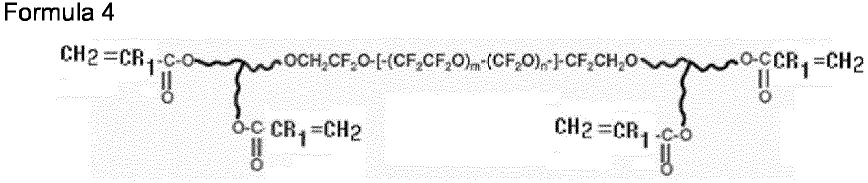 wherein in Formula 4, R₁ may be hydrogen or a C₁-C₆ alkyl group, m and n may be greater than 0, and the sum of m and n may be in a range of about 2 to about 300 or about 1 to about 100. For example, m may be a number in a range of about 1 to about 150 or about 1 to about 100, and n may be a number in a range of about 1 to about 150 or about 1 to about 100.

In Formula 4, the wavy lines may each represent a linker group.

The weight average molecular weight of the compound represented by Formula 4 may be in a range of about 400 to about 10,000, about 400 to about 5,000, or about 500 to about 3,000.

In the polymerizable monomer including the PFPE unit and having two or more polymerizable functional groups, the number of polymerizable functional groups may be three or more, or four or more. The compound of Formula 3 has four (meth)acrylic groups, which are a lot of crosslinkable functional groups, and thus it may form a network that can trap a large amount of liquid while using a small amount compared to the case of using a compound with a smaller number of crosslinkable functional groups.

The second polymerizable monomer may be a compound represented by Formula 4-1, a compound represented by Formula 4-2, and/or a (e.g., any suitable) combination thereof: 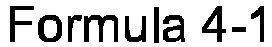 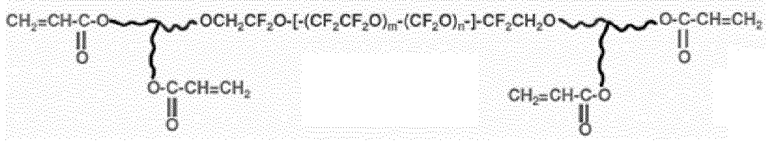 wherein in Formula 4-1, m and n may be greater than 0, the sum of m and n may be in a range of about 2 to about 300 or about 1 to about 100, and for example, m may be a number in a range of about 1 to about 150 or about 1 to about 100, and n may be a number in a range of about 1 to about 150 or about 1 to about 100, and the wavy lines in Formula 4-1 may each represent a linker group, and 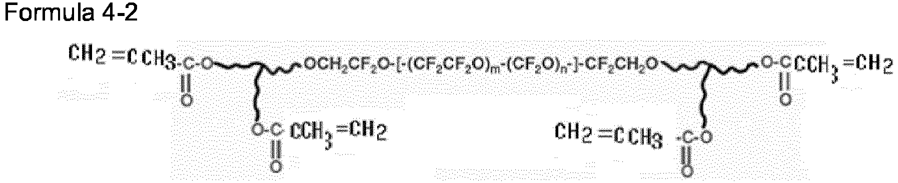 in Formula 4-2, m and n may be greater than 0, the sum of m and n may be in a range of about 2 to about 300 or about 1 to about 100, and for example, m may be a number in a range of about 1 to about 150 or about 1 to about 100, and n may be a number in a range of about 1 to about 150 or about 1 to about 100, and the wavy lines in Formula 4-2 may each represent a linker group.

The polymerizable monomer including the PFPE unit and having two or more polymerizable functional groups may be commercially available under the trade name Fluorolink^{®} AD 1700 PFPE - perfluoropolyether (PFPE) urethane acrylate (Solvay Specialty Polymers Italy SpA):

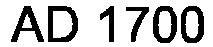

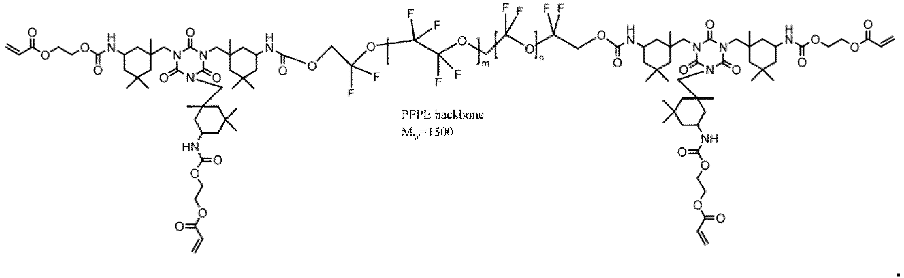

The mixing weight ratio of the first polymerizable monomer, which is a multifunctional acryl-based monomer, to the second polymerizable monomer, which is at least one selected from among the urethane acryl-based monomer having two or more functional groups and the polymerizable monomer including the PFPE unit and having two or more polymerizable functional groups, may be in a range of about 1:10 to about 10:1. The weight ratio of the first polymerizable monomer to the second polymerizable monomer may be, for example, in a range of about 5:1 to about 1:1 or about 3:1 to about 1:1. If the weight ratio of the first polymerizable monomer to the second polymerizable monomer is within these ranges, a gel polymer electrolyte with improved ion conductivity and physical properties may be formed.

The gel polymer electrolyte including (e.g., consisting of) a crosslinked product obtained from the first polymerizable monomer and the second polymerizable monomer may have a very strong interaction with cations such as Li⁺ and anions such as PF₆₋. Such a strong interaction may be confirmed to be caused by differences in the electron density distribution in DFT simulations.

According to one or more embodiments, the amount of the liquid electrolyte may be in a range of about 88 wt% to about 99 wt%, based on 100 parts by weight of the total weight of the gel polymer electrolyte, and the amount of the gel polymer may be in a range of about 1 wt% to about 10 wt%. According to one or more embodiments, the amount of the liquid electrolyte may be in a range of about 88 wt% to about 98 wt%, about 90 wt% to about 98 wt%, about 92 wt% to about 98 wt%, or about 94 wt% to about 98 wt%, based on about 100 parts by weight of the total weight of the gel polymer electrolyte.

According to one or more embodiments, the amount of the gel polymer may be in a range of about 2 wt% to about 12 wt%, about 2 wt% to about 10 wt%, about 2 wt% to about 8 wt%, or about 2 wt% to about 6 wt%, based on about 100 parts by weight of the total weight of the gel polymer electrolyte.

According to one or more embodiments, a separator including the gel polymer electrolyte is prepared separately in the form of a self-standing membrane, and thus a lithium secondary battery, in which a separator including the gel polymer electrolyte is arranged on an anode current collector and a protective film and a cathode is arranged on the separator, may be prepared.

According to one or more embodiments, a battery structure may be formed by placing an anode current collector and a protective film and arranging a separator and a cathode thereon, and then injecting a composition for providing a gel polymer electrolyte into this battery structure and heat treating the resulting battery structure, so as to prepare a lithium secondary battery including a separator including the gel polymer electrolyte.

A lithium secondary battery according to one or more embodiments may include: an anode current collector; a protective film formed on the anode current collector; a separator; a gel polymer electrolyte; and a cathode, wherein an anode active material layer is arranged between the anode current collector and the separator, or is free, the protective film may include boron nitride (BN) and a binder, and the gel polymer electrolyte may include a gel polymer, BN, acetonitrile, and a liquid electrolyte.

In the lithium secondary battery according to one or more embodiments, the thickness of the protective film may be in a range of about 1 µm to about 10 µm, and the thickness of the separator may be in a range of about 5 µm to about 20 µm. If the thicknesses of the protective film and the separator are within these ranges, the lithium secondary battery with improved ion conductivity and physical properties and improved lifespan characteristics may be provided.

In the gel polymer electrolyte, the liquid electrolyte may include an organic solvent, and this organic solvent may serve as a medium through which ions involved in an electrochemical reaction of the battery may move. The organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like. The aprotic solvent may include: a nitrile solvent such as R-CN (wherein R may be a linear, branched, or cyclic C2-C20 hydrocarbon group, and may include a double bond, an aromatic ring, or an ether group), and/or the like; an amide solvent such as dimethylformamide, and/or the like; a dioxolane solvent such as 1,3-dioxolane, 1,4-dioxolane, and/or the like; a sulfolane solvent; and/or the like.

The organic solvent may be used alone, or two or more types (kinds) of the organic solvent may be used in combination.

If the carbonate-based solvent is used, cyclic-type or kind carbonate and chain-type or kind carbonate may be used in combination, and the cyclic-type or kind carbonate and the chain-type or kind carbonate may be mixed in a volume ratio in a range of about 1:1 to about 1:9.

According to one or more embodiments, the carbonate-based compound may include FEC and DEC, and the mixing weight ratio of FEC to DEC may be in a range of about 1:10 to about 1:1.

The lithium salt may be a substance that dissolves in the organic solvent and acts as a source of lithium ions in the battery, enabling a basic operation of the lithium secondary battery and promoting the movement of lithium ions between the cathode and the anode. For use as the lithium salt, lithium difluoro(oxalato)phosphate (LiDFOB) and tetrafluoroborate (LiBF₄) may be used. The concentration of the lithium salt may be, for example, in a range of about 0.1 M to about 5.0 M, about 0.2 M to about 4.0 M, or about 0.3 M to about 4.0 M.

According to one or more embodiments, the lithium salt may include lithium difluoro(oxalato)borate (LiDFOB) and LiBF₄.

According to one or more embodiments, the mixing weight ratio of LiDFOB to LiBF₄ may be in a range of about 1:2 to about 1:0.3.

According to one or more embodiments, the lithium salt may include at least one or at least two selected from among LiPF₆, LiBF₄, LiSbF₆, LiAsF₆, LiClO₄, LiAlOz, LiAlCl₄, LiPOzFz, LiCI, Lil, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂)(wherein x and y may each be an integer from 1 to 20), lithium trifluoromethane sulfonate, lithium tetrafluoroethane sulfonate, and lithium bis(oxalato)borate (LiBOB). The concentration of lithium salt may be, for example, in a range of about 0.1 M to about 5.0 M.

The gel polymer electrolyte may exist within the separator and at the interface between the separator and the cathode. The gel polymer may also be contained within a portion of the cathode of the gel polymer electrolyte.

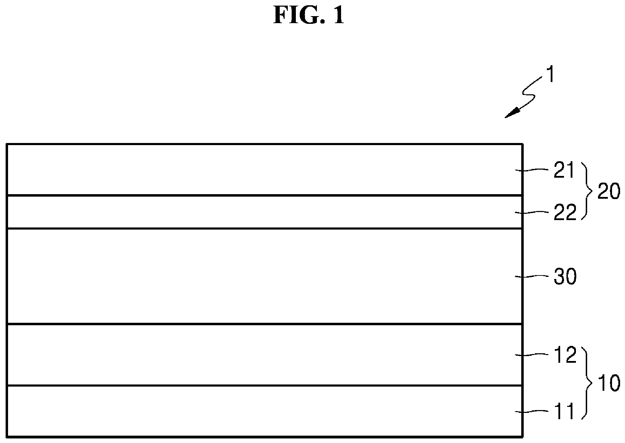

FIG. 1 is a diagram showing a laminated structure of a lithium secondary battery according to one or more embodiments.

A lithium secondary battery 1 may include an anode 20 including an anode current collector 21, wherein the lithium secondary battery 1 is free of an anode active material layer.

A protective film 22 may be selectively formed between the anode current collector 21 and a separator 30.

A cathode 10 may be then sequentially arranged on the separator 30. The cathode 10 may include a cathode active material layer 12 and a cathode current collector 11. The separator 30 may include a gel polymer electrolyte therein.

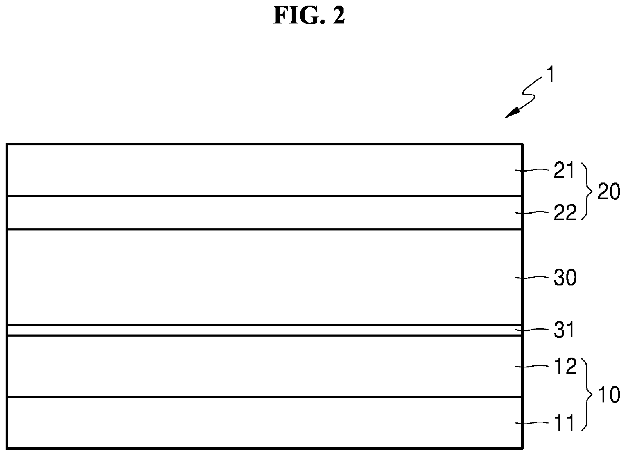

As shown in FIG. 2, a gel polymer electrolyte 31 may be arranged between the separator 30 and the cathode 10. In one or more embodiments, the cathode 10 may include the gel polymer electrolyte 31 therein.

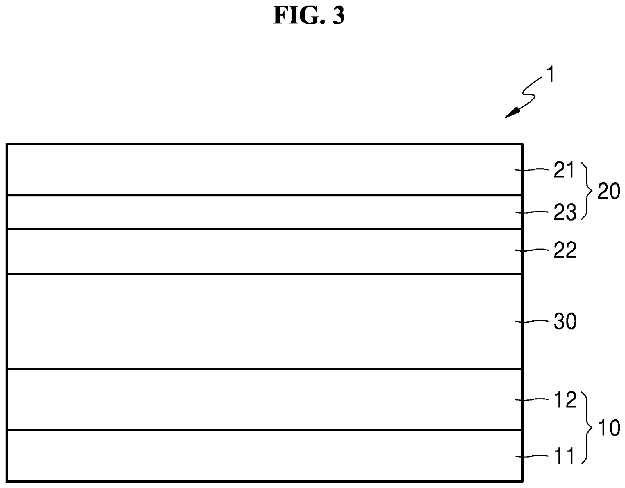

As shown in FIG. 3, an anode active material layer 23 may be further arranged between the anode current collector 21 and the protective film 22. The anode active material layer may include a lithium metal or a lithium alloy.

A plated lithium layer may be further included between the anode current collector 21 and the protective film 22.

The protective film may be a lithium-ion conductive buffer layer, and may prevent or reduce the separator containing the gel polymer electrolyte from contacting lithium metal. In this regard, the protective film may hinder formation and growth of lithium dendrites arranged on the anode current collector.

According to one or more embodiments, a lithium electrodeposition-inducing layer may be further included between the anode current collector and the protective film.

In the anode of the lithium secondary battery according to one or more embodiments, the thickness expansion rate of the anode represented by Equation 1 may be about 150 % or less: Thickness expansion rate of anode (%) = [Thickness of plated lithium layer formed on anode current collector after 100 cycles of charging/thickness of plated lithium layer formed on anode current collector after formation] × 100

For example, the thickness expansion rate of the anode may be about 140 % or less, about 139 % or less, about 138 % or less, about 136 % or less, about 105 % to about 136 %, or about 110 % to about 136 %. By including a binder including a cross-linked polymer with an increased modulus, the strength of the binder may increase, thereby suppressing or reducing a change in the volume of the anode during charging and discharging. The charging and discharging conditions may refer to Evaluation Examples described herein.

The binder of the protective film may be, for example, a vinylidene fluoride-hexafluoropropylene (VDF-HFP) copolymer, polyethylene oxide, polypropylene oxide, polydimethylsiloxane, polyacrylonitrile, polymethyl (meth)acrylate, polyvinyl chloride, polyvinylidene fluoride, polyvinylidene fluoride-co-hexafluoropropylene, polyethyleneimine, polyphenylene terephthalamide, polymethoxypolyethylene glycol (meth)acrylate, poly2-methoxy ethylglycidyl ether, and/or a (e.g., any suitable) combination thereof.

In the binder of the protective film, for example, a second polymer including a functional group crosslinkable with a first polymer including a hydroxyl group may include, as a product of a cross-linking reaction, a crosslinked polymer of the first polymer and the second polymer.

The weight ratio of the first polymer to the second polymer may be in a range of about 50:50 to about 99:1, and the second polymer may be at least one selected from among fluorinated polyamic acid including a carboxyl group and fluorinated polyimide including a carboxyl group.

The protective film may be dense so that the density and strength thereof may increase. In this regard, lithium ions may move freely and the transfer of lithium ions may be improved, thereby improving lithium electrodeposition characteristics. As a result, the improved ion conductivity may lead to improvement of high-rate characteristics of the lithium secondary battery. In addition, by arranging such a protective film on the anode active material layer, side reactions between the anode active material layer and the electrolyte may be effectively blocked and suppressed or reduced.

The protective film may further include inorganic materials. The inorganic material may be one selected from the group consisting of silica (SiO₂), alumina (Al₂O₃), titanium oxide (TiO₂), lithium titanium oxide (LiTiO₂), barium titanium oxide (BaTiO₂), lithium alumina (LiAlO₂), and zeolite, and/or a (e.g., any suitable) mixture (or combination) thereof.

The mixing ratio of the first polymer including a hydroxyl group to the second polymer may be adjusted to be in a range of about 50:50 to about 99:1, about 50:50 to about 90:10, or about 60:40 to about 90:10.

If the protective film according to one or more embodiments is present on the surface of the anode active material layer including lithium metal, the formation and/or growth of lithium dendrites on the anode current collector may be effectively prevented or reduced. In this regard, the anode including the protective film and the lithium secondary battery including the anode may have improved cycle characteristics and stability.

The first polymer including a hydroxyl group may include a polymerization product or a hydrolysate thereof of at least one monomer selected from among: carboxymethyl cellulose (CMC), polyvinyl alcohol (PVA), vinylacetate, butyl (meta)acrylate, 2-hydroxyethyl (meta)acrylate, 2-hydroxypropyl (meta)acrylate, 4-hydroxybutyl (meta)acrylate, 6-hydroxyhexyl (meta) acrylate, 8-hydroxyoctyl (meta)acrylate, 2-hydroxyethyleneglycol (meta)acrylate, 2-hydroxypropyleneglycol (meta)acrylate, acrylic acid, methacrylic acid, 2-(meta)acryloyloxy acetic acid, 3-(meta)acryloyloxy propyl acid, 4-(meta)acryloyloxy butyl acid, itaconic acid, maleic acid, 2-isocyanatoethyl (meta)acrylate, 3-isocyanatopropyl (meta)acrylate, 4-isocyanatobutyl (meta)acrylate, (meta)acrylamide, ethylene di(meta)acrylate, diethylene glycol(meta)acrylate, triethyleneglycol di(meta)acrylate, trimethylenepropane tri(meta)acrylate, trimethylenepropanetriacrylate, 1,3-butandiol (meta)acrylate, 1,6-hexanediol di(meta)acrylate, allyl acrylate, and N-vinylcaprolactam.

The first polymer may be PVA. The PVA may be, for example, a hydrolysate obtained by hydrolyzing polyvinyl acetate with alkali.

The saponification degree of the PVA may be in a range of about 60 % to about 99 %, about 70 % to about 95 %, about 75 % to about 90 %, or about 80 % to about 90 %. The saponification degree of the PVA may be, for example, in a range of about 85 % to about 90 %. If the saponification degree is within these ranges, the physical properties of the protective film may be further improved. The weight average molecular weight of the first polymer may be in a range of about 10,000 daltons to about 500,000 daltons, about 10,000 daltons to about 500,000 daltons, about 10,000 daltons to about 400,000 daltons, about 10,000 daltons to about 300,000 daltons, about 10,000 daltons to about 200,000 daltons, about 50,000 daltons to about 150,000 daltons, about 70,000 daltons to about 100,000 daltons, or about 80,000 daltons to about 100,000 daltons. If the weight average molecular weight of the first polymer is within these ranges, the physical properties of the protective film may be further improved.

The protective film may further include the second polymer having a functional group cross-linkable with the first polymer including a hydroxyl group. The protective film may further include a cross-linked polymer of the first polymer and the second polymer.

The second polymer may include at least one selected from among fluorinated polyamic acid including a carboxyl group and fluorinated polyimide including a carboxyl group.

The fluorinated polyamic acid including a carboxyl group may be, for example, a polymer represented by Formula 5 or 6, and the fluorinated polyimide including a carboxyl group may be, for example, a polymer represented by Formula 7 or 8: 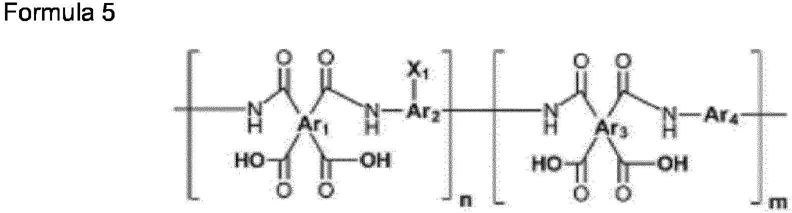 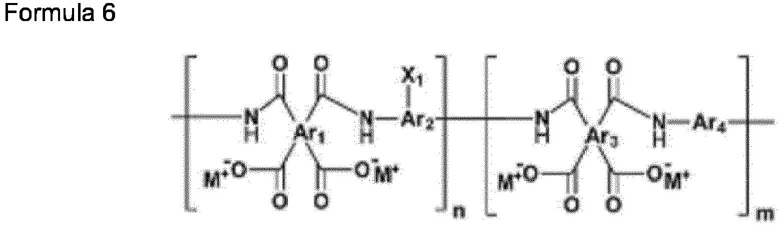 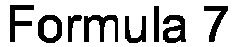 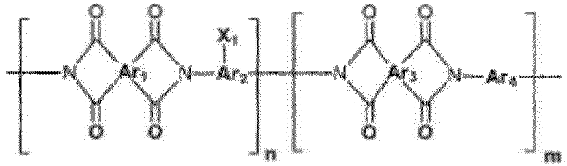 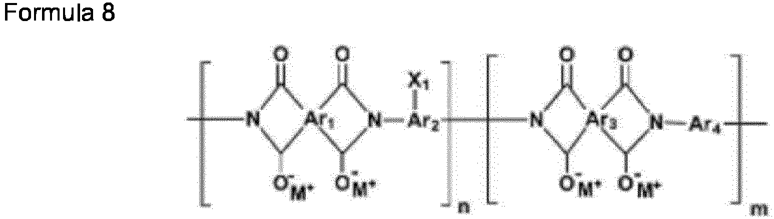
wherein in the formulae above, M may be alkali metal,
Ar₁ and Ar₃ may each independently be an aromatic cyclic group selected from among a substituted or unsubstituted tetravalent C₆-C₂₄ arylene group and a substituted or unsubstituted tetravalent C₄-C₂₄ heteroarylene group, wherein the aromatic cyclic group may include one aromatic ring, a fused ring of two or more aromatic rings, or a ring in which two or more aromatic rings are linked to each other via a single bond, -O-, -S-, -C(=O)-, -S(=O)₂-, -Si(Ra)(Rb)- (wherein Ra and Rb may each independently be a C₁-C₁₀ alkyl group), a substituted or unsubstituted C₁-C₁₀ alkylene group, or -C(=O)-NH-,
Ar₂ and Ar₄ may each independently be an aromatic cyclic group selected from among a substituted or unsubstituted divalent C₆-C₂₄ arylene group and a substituted or unsubstituted divalent C₄-C₂₄ heteroarylene group, wherein the aromatic cyclic group may include one aromatic ring, a fused ring of two or more aromatic rings, or a ring in which two or more aromatic rings are linked to each other via a single bond, -O-, -S-, -C(=O)-, -S(=O)₂-, -Si(Ra)(Rb)- (wherein Ra and Rb may each independently be a C₁-C₁₀ alkyl group), a substituted or unsubstituted C₁-C₁₀ alkylene group, or - C(=O)-NH-,
at least one selected from among Ar₁ to Ar₄ may be substituted with a halogen group,
X₁ may be -COOH, -OH, -CO-NH₂, or -COH, as a first functional group, and
n and m may each indicate a mole fraction within a repeating unit and satisfy 0<n≤1, 0≤m<1, and n+m=1.

The halogen group may be a fluorine group, a chlorine group, a bromine group, or an iodine group. For example, the halogen group may be a fluorine group.

Ar₁ and Ar₃ may each independently be selected from among Formulae 5a and 5b, and Ar₂ and Ar₄ may each independently be selected from among Formulae 5c to 5e: 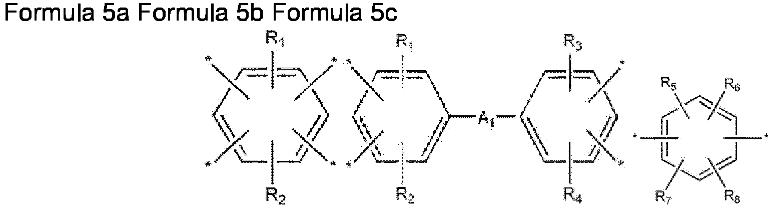 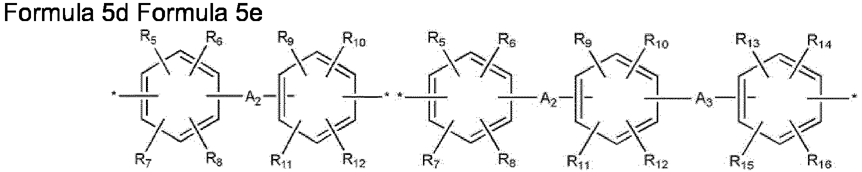 wherein in the formulae above, R₁, R₂, R₃, R₄, R₅, R₆, R₇, R₈, R₉, R₁₀, R₁₁, R₁₂, R₁₃, R₁₄, R₁₅, and R₁₆ may each independently be hydrogen, a halogen, -COOH, - OH, -CO-NH₂, -COH, a C₁-C₁₀ alkyl group unsubstituted or substituted with a halogen, a C₆-C₂₀ aryl group unsubstituted or substituted with a halogen, or a C₂-C₂₀ heteroaryl group unsubstituted or substituted with a halogen, wherein at least one selected from among R₁ to R₁₆ may be a halogen group or a group substituted with a halogen group, A₁, A₂, and A₃ may each independently be a single bond, -O-, -C(=O)-, -S-, -S(=O)₂-, - Si(Ra)(Rb)- (wherein Ra and Rb may each independently be a C₁-C₁₀ alkyl group), a C₁-C₁₀ alkylene group unsubstituted or substituted with a halogen, or -C(=O)-NH-, and Formulae 1c to 1e, selected for Ar₂, may include at least one selected from among R₅ to R₁₆ as the first functional group, which includes -COOH, -OH, -CO-NH₂, or -COH.

For example, in Formulae 5a to 5e, R₁ to R₁₆ may each independently be a hydrogen atom, a halogen atom, a hydroxyl group, -CH₃, or -CF₃, wherein, in Formulae 5c to 5e selected for Ar₂, at least one selected from among R₅ to R₁₆ may be, as a first functional group, -COOH, -OH, -CO-NH₂, or -COH, and A₂ and A₃ may each independently be a single bond, -O-, -CO-, -S-, -SO₂-, -C(CH₃)₂-, -CONH-, -C(CF₃)₂-, - CH₂-, or -CF₂₋.

The fluorinated polyamic acid including a carboxyl group may be, for example, a polymer represented by Formula 9 or 10, and the fluorinated polyimide including a carboxyl group may be, for example, a polymer represented by Formula 11 or 12: 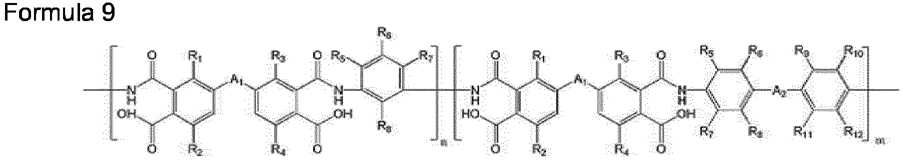 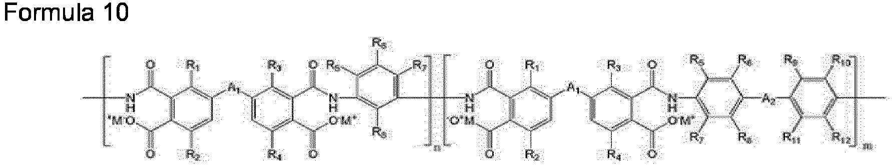 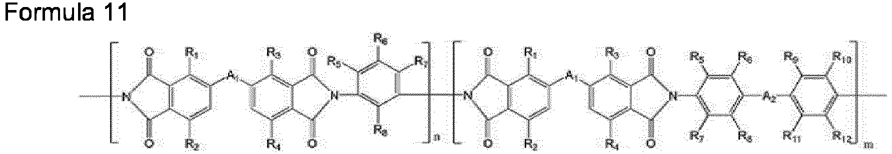 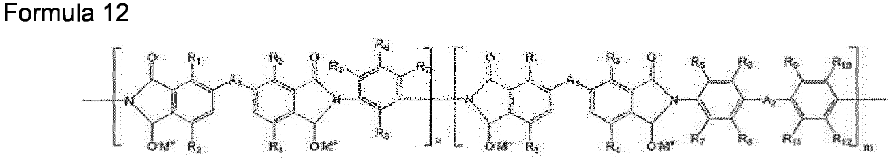
wherein in the formulae above, M may be lithium or sodium,
R₁, R₂, R₃, R₄, R₅, R₆, R₇, R₈, R₉, R₁₀, R₁₁, and R₁₂ may each independently be hydrogen, a halogen, -COOH, -OH, -CO-NH₂, -COH, a C₁-C₁₀ alkyl group unsubstituted or substituted with a halogen, a C₆-C₂₀ aryl group unsubstituted or substituted with a halogen, or a C₂-C₂₀ heteroaryl group unsubstituted or substituted with a halogen, wherein at least one selected from among R₁ to R₁₂ may be a halogen group or a group substituted with a halogen group,
A₁ and A₂ may each independently be a single bond, -O-, -S-, -C(=O)-, - S(=O)₂-, -Si(Ra)(Rb)- (wherein Ra and Rb may each independently be a C₁-C₁₀ alkyl group), a C₁-C₁₀ alkylene group unsubstituted or substituted with a halogen group, or - C(=O)-NH-,
at least one selected from among R₅, R₆, R₇, and R₈ may be -COOH, -OH, - CO-NH₂, or -COH, and n and m may each indicate a mole fraction within a repeating unit and satisfy 0<n≤1, 0≤m<1, and n+m=1.

The halogen group may be a fluorine group, a chlorine group, a bromine group, or an iodine group. The halogen group may be a fluorine group. Ar₁ and Arc may each independently be selected from among Formulae 5a and 5b, and Ar₂ and Ar₄ may each independently be selected from among Formulae 5c to 5e.

The fluorinated polyamic acid including a carboxyl group may be represented by Formula 13 or 14, and the fluorinated polyimide including a carboxyl group may be represented by Formula 15 or 16: 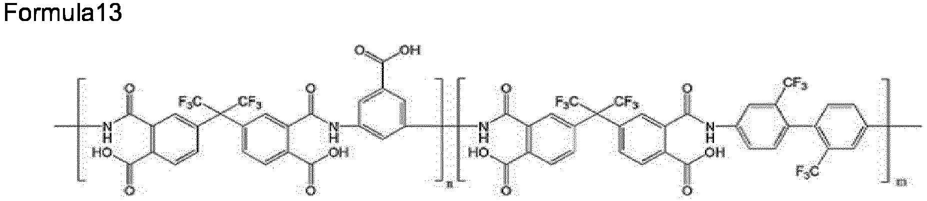 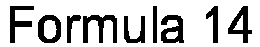 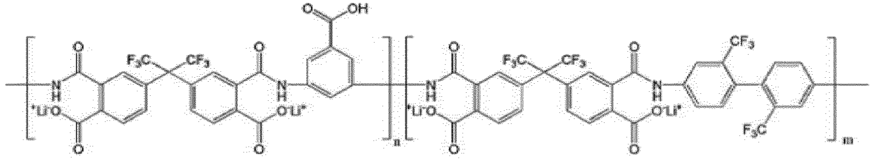 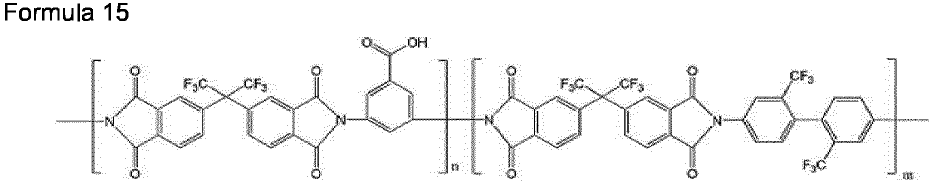 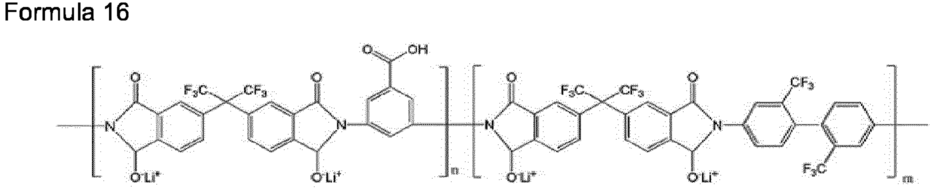 wherein in the formulae above, n and m each indicate a mole fraction within a repeating unit and satisfy 0<n≤1, 0≤m<1, and n+m=1.

In the second polymer, mole fractions of a repeating unit including a cross-linking group and a repeating unit not including a cross-linking group may each satisfy 0<n≤0.5, 0.5≤m<1, and n+m=1. In the second polymer, mole fractions of a repeating unit including a cross-linking group and a repeating unit not including a cross-linking group may each satisfy 0.1≤n≤0.4, 0.6≤m≤0.9, and n+m=1. In the second polymer, mole fractions of a repeating unit including a cross-linking group and a repeating unit not including a cross-linking group may each satisfy 0.15≤n≤0.35, 0.65≤m≤0.85, and n+m=1. In the second polymer, mole fractions of a repeating unit including a cross-linking group and a repeating unit not including a cross-linking group may each satisfy 0.2≤n≤0.3, 0.7≤m≤0.8, and n+m=1. If the mole fraction is within the ranges above, the physical properties of the protective film may be further improved.

The second polymer may be a random copolymer. The second polymer may be a block copolymer.

The weight average molecular weight of the second polymer may be in a range of about 10,000 daltons to about 1,200,000 daltons, about 10,000 daltons to about 1,100,000 daltons, about 10,000 daltons to about 1,000,000 daltons, about 10,000 daltons to about 500,000 daltons, about 100,000 daltons to about 500,000 daltons, about 100,000 daltons to about 400,000 daltons, for example, about 100,000 daltons to about 300,000 daltons. If the weight average molecular weight of the first polymer is within the ranges above, the physical properties of the protective film may be further improved.

In the protective film, the weight ratio of the first polymer including a hydroxyl group to the second polymer included in the third polymer may be in a range of about 99:1 to about 50:50, about 95:5 to about 55:45, about 95:5 to about 60:40, about 95:5 to about 65:35, or about 90:10 to about 70:30. If the weight ratio of the first polymer to the second polymer is within the ranges above, the physical properties of the protective film may be further improved.

If hydroxyl group of the first polymer and the carboxyl group of the second polymer may react with each other to form an ester bond, the third polymer in which the first polymer and the second polymer are crosslinked may be formed. The formation of the third polymer may improve the stability of the protective film, and a halogen group, such as a fluorine functional group, may improve the interfacial stability by degrading the formation of irreversible lithium inclusion.

The protective film according to one or more embodiments may include, as a crosslinked polymer, a crosslinked polymer of the PVA and the fluorinated polyamic acid including a carboxyl group. The fluorinated polyamic acid including a carboxyl group may be, for example, the polymer represented by Formula 9 or 10.

According to one or more embodiments, the crosslinked polymer of the protective film may be a crosslinked polymer of the PVA and the fluorinated polyimide including a carboxyl group (PVA/PI-f). The fluorinated polyimide including a carboxyl group may be the polymer represented by Formula 15 or 16.

The protective film may include a polar functional group as a binder, and may be free of a lithium salt.

The protective film may further include a lithium salt, and inclusion of a lithium salt may ensure excellent or suitable ion conductivity of the protective film. For use as the lithium salt, for example, at least one material selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄) may be used.

In the anode according to one or more embodiments, the anode active material layer may include a lithium metal foil, lithium metal powder, a lithium alloy foil, lithium alloy powder, and/or a (e.g., any suitable) combination thereof, and the lithium alloy may include lithium and a first metal.

The anode active material layer may include: a carbon-based material; a mixture of a carbon-based material and one or more selected from among a first metal; a composite of a carbon-based material and one or more selected from among a first metal; and/or a (e.g., any suitable) combination thereof, wherein the carbon-based material may include amorphous carbon, and the amorphous carbon may have an average particle diameter in a range of about 10 nm to about 100 nm. The carbon-based material may include carbon black, carbon nanotubes, carbon nanofibers, fullerene, activated carbon, carbon fibers, and/or a (e.g., any suitable) combination thereof.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), and/or a (e.g., any suitable) combination thereof.

A lithium metal layer may be additionally arranged between the anode current collector and one side of the protective film. A lithium metal layer may be additionally arranged on the other side facing the one side of the protective film.

The thickness of the protective film may be in a range of about 1 µm to 10 µm, about 1 µm to about 8 µm, about 1 µm to about 7 µm, about 2 µm to about 6 µm, or about 3 µm to about 5 µm. If the thickness of the protective film is within these ranges, the internal resistance may increase and the energy density of the lithium secondary battery including the protective film may have be excellent or suitable without deterioration, and the high-rate characteristics and lifespan characteristics may be improved.

According to another aspect, provided is a lithium secondary battery including: an anode including anode electrode current collector; a cathode; and an electrolyte arranged between the anode and the cathode, wherein the electrolyte may include the aforementioned gel polymer electrolyte for a lithium secondary battery.

According to one or more embodiments, the electrolyte may further include a liquid electrolyte, a solid electrolyte, a gel electrolyte, and/or a (e.g., any suitable) combination thereof.

The liquid electrolyte may be prepared by dissolving lithium salt in an organic solvent.

The solid electrolyte may include an oxide-based solid electrolyte, a sulfide-based solid electrolyte, a polymer solid electrolyte, and/or a (e.g., any suitable) combination thereof. The gel electrolyte may be in a gel state without including a polymer.

The gel electrolyte may include a polymer gel electrolyte. The cathode may include a cathode current collector and a cathode active material layer, and at least one selected from among the cathode current collector and the anode current collector may include a base film and a metal layer arranged on a surface (e.g., one surface or both surfaces (e.g., opposite surfaces or opposite sides)) of the base film, wherein the base film may include a polymer, the polymer may include polyethylene terephthalate (PET), polyethylene (PE), polypropylene (PP), polybutylene terephthalate(PBT), polyimide (PI), and/or a (e.g., any suitable) combination thereof, and the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy (e.g., any suitable combination) thereof.

The lithium metal may include, for example, a lithium metal foil, a lithium alloy foil, and/or a (e.g., any suitable) combination thereof. The lithium metal may include (e.g., may be in the form of) powder, and such lithium powder may include lithium metal powder, lithium alloy powder, and/or a (e.g., any suitable) combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, and/or the like. The anode active material layer including a lithium metal foil may be, for example, a lithium metal layer. The anode active material layer including a lithium alloy foil may be, for example, a lithium alloy layer. The anode active material layer including lithium metal powder and/or lithium alloy powder may be introduced by coating the anode current collector with a slurry containing lithium powder and a binder. The binder may be, for example, a fluorine-based binder such as PVDF. The anode active material layer may be free of a carbon-based anode active material. In this regard, the anode active material layer may include (e.g., consist of) a metal-based anode active material.

The thickness of the lithium metal may be, for example, in a range of about 1 µm to about 50 µm, about 1 µm to about 30 µm, about 10 µm to about 30 µm, or about 10 µm to about 80 µm. If the thickness of the lithium metal is within the ranges above, the lifespan characteristics of the lithium secondary battery including the protective film may be further improved. The particle diameter of the lithium powder may be, for example, in a range of about 0.1 µm to about 3 µm, about 0.1 µm to about 2 µm, or about 0.1 µm to about 2 µm. If the particle diameter of the lithium powder is within the ranges above, the lifespan characteristics of the lithium secondary battery including the protective film may be further improved.

The thickness of the anode active material layer may be, for example, in a range of about 0.1 µm to about 500 µm, about 1 µm to about 500 µm, or about 10 µm to about 500 µm, but the present disclosure is not limited thereto. The thickness may be adjusted depending on the desired or required type or kind, capacity, and/or the like of the lithium secondary battery. If the thickness of the anode active material layer is within these ranges, the cycle characteristics of the lithium secondary battery may be improved without deterioration in the energy density.

The lithium secondary battery according to one or more embodiments may not include (e.g., may exclude) an anode active material layer between the anode current collector and the protective film. The anode not including an anode active material layer may be introduced into the lithium secondary battery together with the cathode and the electrolyte. Afterwards, by charging the lithium secondary battery, lithium metal may be plated between the anode current collector and the protective film, and this plated lithium metal may serve as an anode active material layer. In this regard, the anode active material layer may be a plated lithium layer.

The lithium secondary battery may further include a separator.

The pore diameter of the separator may be generally in a range of about 0.01 µm to about 10 µm, and the thickness of the separator may be generally in a range of about 5 µm to about 20 µm. For use as the separator, for example, an olefin-based polymer such as polypropylene, or a sheet or non-woven fabric made of glass fiber or polyethylene may be used. If a solid polymer electrolyte is used as the electrolyte, the solid polymer electrolyte may serve as the separator.

The olefin-based polymer among the separator may include, for example, polyethylene, polypropylene, or a multi-layer film of two or more layers thereof, and examples of the multi-layer may include a two-layer separator of polyethylene/polypropylene, a three-layer separator of polyethylene/polypropylene/polyethylene, a three-layer separator of polypropylene/polyethylene/polypropylene, and/or the like.

In the lithium secondary battery according to one or more embodiments, the liquid electrolyte may contain a lithium salt and an organic solvent.

For use as the organic solvent, for example, an aprotic organic solvent, such as N-methyl-2-pyrrolidone, propylene carbonate, ethylene carbonate, butylene carbonate, dimethyl carbonate, diethyl carbonate, gamma-butylolactone, 1,2-dimethoxy ethane, tetrahydroxy franc, 2-methyl tetrahydrofuran, dimethyl sulfoxide, 1,3-dioxolane, formamide, dimethyl formamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and/or the like, may be used. Among the aforementioned examples, the carbonate-based solvent, such as propylene carbonate, ethylene carbonate, butylene carbonate, dimethyl carbonate, diethyl carbonate, and/or the like, may be used.

For use as the lithium salt, any lithium salt commonly used in lithium secondary batteries may be used, and for example, as a material easily dissolved in the non-aqueous solvent, at least one of materials selected from among LiSCN, LiN(CN)₂, LiClO₄, LiBF₄, LiAsF₆, LiPF₆, LiCFsSOs, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂, and/or the like, may be used.

The concentration of the lithium salt in the liquid electrolyte may be, for example, in a range of about 1 M to about 5 M, for example, about 1 M to about 2.5 M. In these ranges, lithium ions desired or required for charging and discharging of the lithium secondary battery may be generated in a sufficient amount.

If the gel-type or kind polymer electrolyte is present in pores of a porous substrate, the interfacial resistance between the cathode, the anode, and the separator may be minimized or reduced, thereby facilitating lithium transfer.

According to one or more embodiments, the anode active material layer may be arranged at the time of assembling the lithium secondary battery. According to one or more embodiments, an anode active material layer may be included due to a lithium metal being plated after charging. In this regard, an anode active material layer may be a plated lithium layer.

Such an anode active material layer may include a lithium metal or a lithium alloy.

If the anode active material layer is arranged at the time of assembly, a carbon-based material alone, and/or a (e.g., any suitable) combination of a carbon-based material and at least one selected from among a metal and a metalloid may be included.

The carbon-based material may include amorphous carbon, wherein the amorphous carbon may have an average particle diameter in a range of about 10 nm to about 100 nm. The carbon-based material may include carbon black (CB), acetylene black (AB), furnace black (FB), ketjen black (KB), graphene, and/or a (e.g., any suitable) combination thereof.

The anode material layer may include a lithium metal foil, lithium metal powder, a lithium alloy foil, lithium alloy powder, and/or a (e.g., any suitable) combination thereof, and the lithium alloy may include lithium and a first metal.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), and/or a (e.g., any suitable) combination thereof.

For example, the anode active material layer may include a lithium foil, lithium powder, and/or a (e.g., any suitable) combination thereof. Examples of the lithium foil may include a lithium metal foil, a lithium alloy foil, and/or a (e.g., any suitable) combination thereof. The lithium metal may include (e.g., may be in the form of) powder, and such lithium powder may include lithium metal powder, lithium alloy powder, and/or a (e.g., any suitable) combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, and/or the like. The anode active material layer including a lithium metal foil may be, for example, a lithium metal layer. The anode active material layer including a lithium alloy foil may be, for example, a lithium alloy layer. The anode active material layer including lithium metal powder and/or lithium alloy powder may be introduced by coating the anode current collector 21 with a slurry containing lithium powder and a binder. The binder may be, for example, a fluorine-based binder such as polyvinylidene fluoride (PVDF). The anode active material layer may be free of a carbon-based anode active material. In this regard, the anode active material layer may include (e.g., consist of) a metal-based anode active material.

The anode current collector may be, for example, formed of a material that does not react with lithium, that is, a material that forms neither an alloy nor a compound with lithium. A material for providing the negative electrode current collector may be, for example, Cu, stainless steel, Ti, Fe, Co, Ni, and/or the like, but the present disclosure is not limited thereto. Any material available as an electrode current collector in the art may be used. The negative electrode current collector may be formed of one of the aforementioned metals, an alloy of two or more of the aforementioned metals, or a coating material. The negative electrode current collector may include, for example, (e.g., may be in the form of) a plate or foil.

In one or more embodiments of the present disclosure, the cathode current collector may use, for example, a plate or a foil, each including (e.g., consisting of) In, Cu, Mg, stainless steel, Ti, Fe, Co, Ni, Zn, a plate or foil made of aluminum (Al), germanium (Ge), lithium (Li) or an alloy thereof. The thickness of the cathode current collector 11 may be, for example, in a range of about 1 µm to about 100 µm, about 1 µm to about 50 µm, about 5 µm to about 25 µm, or about 10 µm to about 20 µm.

The anode active material layer may include an anode active material and a binder.

The anode active material may include, for example, (e.g., may be in the form of) particles. The particle diameter of the anode active material in the form of particles may be, for example, in a range of about 10 nm to about 4 µm, about 10 nm to about 1 µm, about 10 nm to about 500 nm, about 10 nm to about 100 nm, or about 20 nm to about 80 nm. If the average particle diameter of the anode active material is within the ranges above, lithium may be more easily subjected to reversible plating and/or dissolution during charging and discharging. The average particle diameter of the anode active material may be, for example, a median diameter D50 measured by using a laser particle size distribution meter.

The anode active material may include, for example, one or more selected from among a carbon-based anode active material and a metal or metalloid anode active material. The carbon-based anode active material may be, for example, amorphous carbon. Examples of the amorphous carbon may include CB, AB, FB, KB, graphene, and/or the like, but are not necessarily limited thereto. Any material categorized as amorphous carbon in the art may be used. The amorphous carbon may be carbon that has no or very low crystallinity, and in this regard, may be distinguished from crystalline carbon or graphite-based carbon. The metallic or metalloid anode active material may include at least one selected from among Au, Pt, Pd, Au, Pt, Pd, Si, Ag, Al, Bi, Sn, and Zn, but the present disclosure is not necessarily limited thereto. Any material available as the metallic or metalloid anode active material capable of providing an alloy or compound with lithium in the art may be used. For example, Ni does not form an alloy with lithium, and thus Ni is not regarded as a metallic anode active material in the present specification. Among such anode active materials, the anode active material layer may include a single anode active material, or may include a mixture of a plurality of different anode active materials. The anode active material layer may include, for example, a mixture of amorphous carbon with at least one metal selected from among Au, Pt, Pd, Si, Ag, Al, Bi, Sn, Zn. The mixing ratio of the mixture may be a weight ratio, and for example, may be in a range of about 10:1 to about 1:2, about 10:1 to about 1:1, about 7:1 to about 1:1, about 5:1 to about 1:1, or about 4:1 to about 2:1. The anode active material included in the anode active material layer may include, for example, a mixture of first particles including (e.g., consisting of) amorphous carbon and second particles including (e.g., consisting of) a metal or a metalloid. The metal may include, for example, Au, Pt, Pd, Si, Ag, Al, Bi, Sn, Zn, and/or the like. The amount of the second particle may be in a range of about 8 wt% to about 60 wt%, about 10 wt% to about 50 wt%, about 15 wt% to about 40 wt%, or about 20 wt% to about 30 wt%, based on (100 wt% of) the total weight of the mixture. If the amount of the second particles is within the ranges above, for example, the cycle characteristics of the lithium secondary battery may be further improved.

Examples of the binder included in the anode active material layer may include a styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like, but are not limited thereto. Any material available as the binder in the art may be used. The binder may be used alone or in a combination of a plurality of different binders. If the anode active material layer does not include a binder, the anode active material layer may be easily detached from a ceramic coating layer or the anode current collector. The amount of the binder included in the anode active material layer may be, for example, in a range of about 1 wt% to about 20 wt% based on the total weight of the anode active material layer.

The thickness of the anode active material layer may be, for example, in a range of about 0.1 µm to about 500 µm or about 100 µm to about 50 µm. The thickness of the anode active material layer may be, for example, in a range of about 1 % to about 50 %, about 1 % to about 30 %, about 1 % to about 10 %, or about 1 % to about 5 %, of the thickness of a cathode active material layer. If the thickness of the anode active material layer is excessively (or substantially) small (e.g., is out of the above ranges), lithium dendrites formed between the anode active material layer and the anode current collector may cause the anode active material layer to collapse, making it difficult to improve the cycle characteristics of the lithium secondary battery. If the thickness of the anode active material layer excessively (or substantially) increases e.g., is out of the above ranges), the lithium secondary battery employing the anode may have deterioration in the energy density, making it difficult to improve the cycle characteristics of the lithium secondary battery.

If the thickness of the anode active material layer decreases, for example, the charge capacity of the anode active material layer may also decrease. The charge capacity of the anode active material layer may be, for example, in a range of about 0.1 % to about 50 %, about 1 % to about 30 %, about 1 % to about 10 %, about 1 % to about 5 %, or about 1 % to about 2 %, based on the charge capacity. If the charge capacity of the anode active material layer is excessively (or substantially) small e.g., is out of the above ranges), lithium dendrites formed between the anode active material layer and the anode current collector may cause the anode active material layer to collapse, making it difficult to improve the cycle characteristics of the lithium secondary battery. If the charge capacity of the anode active material layer excessively (or substantially) increases e.g., is out of the above ranges), the lithium secondary battery employing the anode may have deterioration in the energy density, making it difficult to improve the cycle characteristics of the lithium secondary battery. The charge capacity of the cathode active material layer may be obtained by multiplying the charge capacity density (mAh/g) of the cathode active material by the mass of the cathode active material in the cathode active material layer. If several types (kinds) of the cathode active material are used, for each cathode active material, the charge capacity density may be multiplied by the mass, and the sum of these values may be the charge capacity of the cathode active material layer. The charge capacity of the negative electrode active material layer may be calculated in substantially the same way. The charge capacity of the anode active material layer may be obtained by multiplying the charge capacity density (mAh/g) of the anode active material by the mass of the anode active material in the anode active material layer. If several types (kinds) of the anode active material are used, for each anode active material, the charge capacity density may be multiplied by the mass, and the sum of these values may be the charge capacity of the anode active material layer. Here, the charge capacity densities of the positive electrode active material and the negative electrode active material are capacities estimated by using an all-solid half-cell using lithium metal as a counter electrode. By the measurement of charging capacity using a solid-state half-cell, charging capacities of the cathode active material layer and the anode active material layer may be directly measured. If the measured charge capacity is divided by the mass of each active material, the charge capacity density may be obtained. In one or more embodiments, the charge capacities of the cathode active material layer 12 and the anode active material layer may be initial charge capacity measured during charging at the first cycle.

### Lithium secondary battery

The lithium secondary battery according to one or more embodiments may include: the cathode; the anode; and the electrolyte between the cathode and the anode. The lithium secondary battery may further include the separator. This lithium secondary battery may concurrently (e.g., simultaneously) provide excellent or suitable lifespan characteristics. The lithium secondary battery may be, for example, a lithium-sulfur battery, a lithium-air battery, and/or the like, but is not limited to these examples, and any lithium secondary battery used in the art may be used.

The lithium secondary battery may be prepared by, for example, the following example methods, but the methods are not limited thereto and may be adjusted according to desired or required conditions.

### Cathode

First, a cathode active material composition may be prepared by mixing a cathode active material, a conductive material, a binder, and a solvent. The prepared cathode active material composition may be directly applied onto an aluminum current collector, and dried to prepare a cathode plate having a cathode active material layer formed thereon. According to one or more embodiments, the cathode active material composition may be cast on a separate support, and then a film obtained by peeling off from the support may be laminated onto the aluminum current collector to prepare a cathode plate having a cathode active material layer formed thereon.

For use as the cathode active material, a compound (e.g., a lithiated intercalation compound) capable of reversible intercalation and deintercalation of lithium may be used. For example, one or more types (kinds) of a composite oxide including lithium and a metal selected from among Co, Mn, Ni, and/or a (e.g., any suitable) combination may be used as the cathode active material.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, and/or a (e.g., any suitable) combination thereof may be used.

For example, a compound represented by one of (e.g., selected from among) the following formulae may be used: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the formulae above, A may be Ni, Co, Mn, and/or a (e.g., any suitable) combination thereof; X may be Al, Ni, Co, Mn, Cr, Fe, Mg, Sr, V, a rare earth element, and/or a (e.g., any suitable) combination thereof; D may be O, F, S, P, and/or a (e.g., any suitable) combination thereof; G may be Al, Cr, Mn, Fe, Mg, La, Ce, Sr, V, and/or a (e.g., any suitable) combination thereof; and L¹ may be Mn, Al, and/or a (e.g., any suitable) combination thereof.

For example, the cathode active material may be a high-nickel-based cathode active material in which the amount of nickel may be about 80 mol% or more, about 85 mol% or more, about 90 mol% or more, about 91 mol% or more, about 94 mol% or more, or about 99 mol% or less, based on about 100 mol% of metals excluding lithium in the lithium transition metal composite oxide. The high-nickel-based cathode active material may achieve high capacity, and thus may be applied to a high-capacity, high-density lithium secondary battery.

For example, the cathode active material may be LiₐNiₓCo_{y}M_{z}O₂-_{b}A_{b} (where 1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) and/or a (e.g., any suitable) combination thereof, and A is F, S, Cl, Br, and/or a (e.g., any suitable) combination thereof), LiNiₓCo_{y}Mn_{z}O₂ (where 0.8≤x≤0.95, 0≤y≤0.2, 0<z≤0.2, and x+y+z=1), LiNiₓCo_{y}Al_{z}O₂ (where 0.8≤x≤0.95, 0≤y≤0.2, 0<z≤0.2, and x+y+z=1), LiNiₓCo_{y}Mn_{z}Al_{w}O₂ (where 0.8≤x≤0.95, 0≤y≤0.2, 0<z≤0.2, 0<w≤0.2, and x+y+z+w=1), LiₐCoₓM_{y}O_{2-b}A_{b} (where 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and A may be F, S, Cl, Br, and/or a (e.g., any suitable) combination thereof), LiₐNiₓMn_{y}M'_{z}O_{2-b}A_{b} (where 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and A may be F, S, Cl, Br, and/or a (e.g., any suitable) combination thereof), LiₐM1ₓM2_{y}PO_{4-b}X_{b} (where 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), and/or a (e.g., any suitable) combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), and/or a (e.g., any suitable) combination thereof, and X may be O, F, S, P and/or a (e.g., any suitable) combination thereof), or LiₐM3_{z}PO₄ (where 0.90≤a≤1.1 and 0.9≤z≤1.1, and M3 may be chromium (Cr), manganese (Mn), iron (Fe), cobalt (Co), nickel (Ni), copper (Cu), zirconium (Zr), and/or a (e.g., any suitable) combination thereof).

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and/or the like; and a conductive polymer such as a polyphenylene derivative. However, embodiments are not limited thereto, and any suitable conductive material available in the art may be used. In one or more embodiments, the cathode may not include (e.g., may exclude), for example, a separate conductive material.

Examples of the binder may be a vinylidene fluoride/hexafluoropropylene copolymer, polyvinylidene fluoride, polyacrylonitrile, polymethyl methacrylate, polytetrafluoroethylene (PTFE), a mixture of the above-described polymers, a styrene butadiene-rubber polymer, and/or the like may be used. As a solvent, N-methyl pyrrolidone (NMP), acetone, water, and/or the like may be used. However, one or more embodiments are not limited thereto, and any suitable binder and solvent available in the art may be used.

The cathode for a lithium secondary battery may include a current collector and a cathode active material layer formed on the current collector. The cathode active material layer may include a cathode active material, and may further include a binder and/or a conductive material.

According to one or more embodiments, the cathode may further include an additive that may function as a sacrificial cathode.

The amount of the cathode active material may be in a range of about 90 wt% to about 99.5 wt% based on about 100 wt% of the cathode active material layer, and the amounts of the binder and the conductive material may be in a range of about 0.5 wt% to about 5 wt%, respectively, based on about 100 wt% of the cathode active material layer.

The binder may serve to adhere cathode active material particles to each other, and may also serve to adhere the cathode active material to a current collector. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, poly. Examples include, but are not limited to, ester resin and nylon.

The conductive material may be used to provide conductivity to an electrode, and in this regard, any electrically conductive material may be used as long as it does not cause a chemical change in a battery including the conductive material. Examples of the conductive material may include: a carbon-based material such as natural graphite, artificial graphite, CB, AB, KB, carbon fiber, carbon nanofiber, carbon nanotube, and/or the like; a metal-based material in the form of metal powder or metal fiber including Cu, Ni, Al, Ag, and/or the like; a conductive polymer such as a polyphenylene derivative, and/or the like; and/or a (e.g., any suitable) mixture thereof.

The cathode current collector may use, for example, a plate or a foil, each including (e.g., consisting of) In, Cu, Mg, stainless steel, Ti, Fe, Co, Ni, Zn, a plate or foil made of aluminum (Al), germanium (Ge), lithium (Li) or an alloy thereof. The thickness of the cathode current collector 11 may be, for example, in a range of about 1 µm to about 100 µm, about 1 µm to about 50 µm, about 5 µm to about 25 µm, or about 10 µm to about 20 µm.

The cathode current collector may include, for example, a base film and a metal layer arranged on a (e.g., one or both surfaces (e.g., opposite surfaces or opposite sides)) of the base film. The base film may include, for example, a polymer. The polymer may be, for example, a thermoplastic polymer. The polymer may include, for example, PET, PE, PP, PBT, PI, and/or a (e.g., any suitable) combination thereof. The base film may be, for example, an insulator. If the base film includes an insulating thermoplastic polymer, the base film may be softened or liquified upon the occurrence of a short circuit, so that the operation of a battery may stop and a rapid increase in current may then be suppressed or reduced. The metal layer may include, for example, In, Cu, Mg, stainless steel, Ti, Fe, Co, Ni, Zn, Al, Ge, or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated or deposited on the base film. If the thickness of the metal layer decreases, the limit current and/or the maximum current of the cathode current collector 11 may decrease, thereby improving the stability of the lithium metal battery 1. A lead tab may be added on the metal layer for the connection with the outside. The lead tab may be welded to the metal layer or a laminate of metal layer/base film by ultrasonic welding, laser welding, spot welding, and/or the like. The metal layer may be electrically connected to the lead tab while the base film and/or the metal layer melts during welding. A metal chip may be added between the metal layer and the lead tab for stronger welding therebetween. The metal chip may be a thin piece of the same material as the metal in the metal layer. The metal chip may be, for example, a metal foil or a metal mesh. The metal chip may be, for example, an Al foil, a Cu foil, or an SUS foil. By welding the lead tab after disposing the metal chip on the metal layer, the lead tab may be welded to a laminate of metal chip/metal layer or a laminate of metal chip/metal layer/base film. During the welding, the metal layer or the laminate of metal substrate layer/metal chip may melt so that the metal substrate layer and/or the laminate of metal substrate layer/metal chip may be electrically connected to the lead tab. The metal chip and/or the lead tab may be added to a portion on the metal layer. The thickness of the base film may be, for example, in a range of about 1 µm to about 50 µm, about 1.5 µm to about 50 µm, about 1.5 µm to about 40 µm, or about 1 µm to about 30 µm. If the thickness of the base film is within the ranges above, the weight of an electrode assembly may be reduced more effectively. The melting point of the base film may be, for example, in a range of about 100 °C to about 300 °C, about 100 °C to about 250 °C, or about 100 °C to about 200 °C. If the melting point of the base film is within the ranges above, the base film may be melted and easily connected to the lead tab in the process of welding the lead tab. To improve the adhesion between the base film and the metal layer, a surface treatment such as a corona treatment may be performed on the base film. The thickness of the metal layer may be, for example, in a range of about 0.01 µm to about 3 µm, about 0.1 µm to about 3 µm, about 0.1 µm to about 2 µm, or about 0.1 µm to about 1 µm. If the thickness of the metal layer is within the ranges above, the stability of an electrode assembly may be secured while maintaining the conductive. The thickness of the metal chip may be, for example, in a range of about 2 µm to about 10 µm, about 2 µm to about 7 µm, or about 4 µm to about 6 µm. If the thickness of the metal chip is within the ranges above, the connection between the metal layer and the lead tab may be performed more easily. If the cathode current collector 11 has the aforementioned structure, the weight of the cathode 10 may be reduced, and consequently, the energy density of the cathode 10 and the lithium metal battery 1 may be improved.

### Electrolyte

Next, the electrolyte may be prepared. The electrolyte may be, for example, a liquid electrolyte, a solid electrolyte, a gel electrolyte, and/or a (e.g., any suitable) combination thereof. The electrolyte may be, for example, an organic electrolyte solution. The liquid electrolyte may be the same as the one described in connection with the gel polymer electrolyte.

The solid electrolyte may include, for example, an oxide-based solid electrolyte, a sulfide-based solid electrolyte, a polymer solid electrolyte, and/or a (e.g., any suitable) combination thereof.

The solid electrolyte may be, for example, an oxide-based solid electrolyte. The oxide-based solid electrolyte may include at least one selected from among Li_{1+x+y}AlₓTi₂₋ₓSi_{y}P_{3-y}O₁₂ (where 0<x<2 and 0≤y<3), BaTiOs, Pb(Zr,Ti)O₃(PZT), Pb₁-ₓLaₓZr_{1-y} Ti_{y}O₃(PLZT)(where O≤x<1 and O≤y<1), PB(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M may be Te, Nb, or Zr, and x may be an integer from 1 to 10). The solid electrolyte may be prepared by a sintering method and/or the like. For example, the oxide-based solid electrolyte may include a garnet-type or kind (e.g., garnet) solid electrolyte selected from among Li₇La₃Zr₂O₁₂(LLZO) and Li₃₊ₓLa₃Zr₂₋ₐMₐO₁₂ (M-doped LLZO)(where M may be Ga, W, Nb, Ta, or Al, and x may be an integer from 1 to 10, 0<a<2).

The sulfide-based solid electrolyte may include, for example, lithium sulfide, silicon sulfide, phosphorus sulfide, boron sulfide, and/or a (e.g., any suitable) combination thereof. Particles of the sulfide-based solid electrolyte may include Li₂S, P₂S₅, SiS₂, GeS₂, B₂S₃, and/or a (e.g., any suitable) combination thereof. The particles of the sulfide-based solid electrolyte particles may include Li₂S or P₂S₅. The particles of the sulfide-based solid electrolyte particles may have higher lithium ionic conductivity than other inorganic compounds. For example, the sulfide-based solid electrolyte may include Li₂S and P₂S₅. If the sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In one or more embodiments, an inorganic solid electrolyte prepared by adding Li₃PO₄, halogen, halogen compounds, Li₂₊₂ₓZn₁₋ₓGeO₄("LISICON", 0≤5x<1), Li_{3+y}PO₄₋ₓNₓ("LIPON", 0<x<4, 0<y<3), Li_{3.25}Ge_{0.25}P_{0.75}S₄("ThioLISICON"), Li₂O-Al₂O₃-TiO₂-P₂O₅("LATP"), and/or the like to an inorganic solid electrolyte of Li₂S-P₂S₅, SiS₂, GeS₂, B₂S₃, and/or a (e.g., any suitable) combination thereof, may be used as a sulfide solid electrolyte. Non-limiting examples of the sulfide solid electrolyte material are: Li₂S-P₂S₅; Li₂S-P₂S₅-LiX (where X may be a halogen element); Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S -P₂S₅-ZₘSₙ (where 0<m<10, 0<n<10, and Z may be Ge, Zn, or Ga); Li₂S-GeS₂; Li₂S-SiS₂-Li₃PO₄; and Li₂S-SiS₂-LiₚMO_{q} (where 0<p<10, 0<q<10, and M may be P, Si, Ge, B, Al, Ga, or In). In this regard, the sulfide-based solid electrolyte material may be prepared by treating raw starting materials of the sulfide-based solid electrolyte material (e.g., Li₂S, P₂S₅, and/or the like) by a melt quenching method, a mechanical milling method, and/or the like. In one or more embodiments, a calcination process may be performed after the treatment. The sulfide-based solid electrolyte may be amorphous or crystalline, or may be in a mixed state.

The polymer solid electrolyte may include, for example, a mixture of a lithium salt and a polymer or a polymer including an ion-conducting functional group. The polymer solid electrolyte may be, for example, in a solid state at about 25 °C and at about 1 atm. The polymer solid electrolyte may not include (e.g., may exclude) liquid.

The polymer of the polymer solid electrolyte may include, for example, polyethylene oxide (PEO), polyvinylidene fluoride (PVDF), vinylidene fluoridehexafluoropropylene (PVDF-HFP), polyethylene oxide (PEO), a poly(styrene-b-ethylene oxide) block copolymer (PS-PEO), poly(styrene-butadiene), poly(styreneisoprene-styrene), a poly(styrene-b-divinylbenzene) block copolymer, a polystyreneethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ether ketone)(SPEEK), sulfonated poly(arylene ether ketone ketone sulfone)(SPAEKKS), sulfonated poly(aryl ether ketone)(SPAEK), poly[bis(benzimidazobenzisoquinolinones)] (SPBIBI), poly(styrene sulfonate) (PSS), lithium 9,10-diphenylanthracene-2-sulfonate (DPASLi⁺), and/or a (e.g., any suitable) combination thereof, but one or more embodiments are not limited thereto. Any material available as the polymer electrolyte in the art may be used. For use as the lithium salt, any suitable material generally available and/or generally utilized as the lithium salt in the art may be used. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(where x and y may each be between 1 to 20), LiCl, Lil, and/or a (e.g., any suitable) mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1,000 daltons or more, 10,000 daltons or more, 100,000 daltons or more, or 1,000,000 daltons or more.

The gel electrolyte may be, for example, a polymer gel electrolyte. The gel electrolyte may be in a gel state without including a polymer.

The polymer gel electrolyte may include, for example, a liquid electrolyte and a polymer, or an organic solvent and a polymer having an ion-conductive functional group. The polymer solid electrolyte may be, for example, in a solid state at about 25 °C and at about 1 atm. The polymer gel electrolyte may be, for example, in a gel state without including liquid. The liquid electrolyte used in the polymer gel electrolyte may be, for example, a mixture of ionic liquid, a lithium salt, and an organic solvent; a mixture of a lithium salt and an organic solvent; a mixture of ionic liquid and an organic solvent; and/or a (e.g., any suitable) mixture of a lithium salt, ionic liquid, and an organic solvent. The polymer used in the polymer gel electrolyte may be selected from among polymers used in the polymer solid electrolyte. The organic solvent may be selected from among organic solvents used in liquid electrolytes. The lithium salt may be selected from among lithium salts used in polymer solid electrolytes. The ionic liquid may refer to a salt in a liquid state, and a molten salt at room temperature consisting solely of ions and having a melting point below room temperature. The ionic liquid may include, for example, at least one compound including a) at least one cation selected from among ammonium, pyrrolidinium, pyridinium, pyrimidium, imidazolium, piperidinium, pyrazolium, oxazolium, pyridazinium, phosphonium, sulfonium, triazolium, and any mixture thereof, and b) at least one anion selected from among BF₄⁻, PF₆⁻, AsF₆⁻, SbF₆⁻, AlCl₄⁻, HSO₄⁻, CLO₄⁻, CH₃SO₃⁻, CF₃CO₂⁻, Cl⁻, Br, I⁻, SO₄²⁻, CF₃SO₃⁻, (FSO₂)₂N⁻, (C₂F₂SO₂)₂N⁻, (C₂F₂SO₂)(CF₂SO₂)N⁻, and (CF₂SO₂)₂N⁻. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1,000 Da or more, 10,000 Da or more, 100,000 Da or more, or 1,000,000 Da or more.

### Anode

The anode may include an anode current collector.

In one or more embodiments, the anode current collector 21 may include, for example, a base film and a metal layer arranged on one surface or both surfaces (e.g., opposite sides or opposite surfaces) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), and/or a (e.g., any suitable) combination thereof. The polymer may be an insulating polymer. If the base film includes an insulating thermoplastic polymer, the base film may be softened or liquified upon the occurrence of a short circuit, so that the operation of a battery may stop and a rapid increase in current may then be suppressed or reduced. The metal layer may include, for example, Cu, stainless steel, Ti, Fe, Co, Ni, or an alloy thereof. The metal layer may correspond to, for example, a first metal substrate. The metal layer may further include a coating layer including a second metal. The anode current collector 21 may further include a metal chip and/or a lead tab. Details on the base film, the metal layer, the metal chip, and the lead tab of the anode current collector 21 may be understood by referring to the aforementioned cathode current collector. If the anode current collector 21 has such a structure, the weight of the anode 20 may be reduced, and consequently, the energy density of the anode 20 and a lithium battery may be improved.

An anode active material layer may be formed on the anode current collector. The anode active material layer may be formed as a lithium plated layer after charging. In one or more embodiments, the anode active material layer may be formed by using an anode active material during the battery assembly.

A process of preparing the anode active material layer by using an anode active material may be the same as the process of preparing the cathode active material layer, except that an anode active material is used instead of a cathode active material in providing the cathode active material layer.

The lithium secondary battery may further include, for example, a thin film including an element capable of providing an alloy with lithium on one surface of the anode current collector. The thin film may be arranged between the anode current collector and the anode active material layer. The thin film may include, for example, an element capable of providing an alloy with Li. The element capable of providing an alloy with lithium may include, for example, Au, Ag, Zn, Ti, In, Si, Al, Bi, and/or the like, but the present disclosure is not necessarily limited thereto. Any material available as the element capable of providing an alloy with lithium in the art may be used. The thin film may be formed of one of these metals or an alloy of several types (kinds) of metals. Due to the thin film arranged on one surface of the anode current collector, for example, the plated form of a first anode active material layer plated between the thin film and the anode active material layer may be further flattened, thereby further improving the cycle characteristics of the lithium secondary battery.

### Separator

The lithium metal battery may further include a separator between the cathode and the anode.

For use as the separator, any separator commonly used in lithium secondary batteries may be used.

For use as the separator, polyethylene, polypropylene, polyvinylidene fluoride, or a multi-layer film of two or more layers thereof may be used, and examples of the multi-layer film may be a mixed multi-layer film such as a two-layer polyethylene/polypropylene separator, a three-layer polyethylene/polypropylene/polyethylene separator, or a three-layer polypropylene/polyethylene/polypropylene separator.

The separator may include: a porous substrate; and a coating layer on a surface (e.g., one surface or both surfaces (e.g., opposite surfaces or opposite sides)) of the porous substrate and including an organic material, an inorganic material, and/or a (e.g., any suitable) combination thereof.

The porous substrate may be: polyolefin such as polyethylene, polypropylene, and/or the like.; polyester such as polyethylene terephthalate, polybutylene terephthalate, and/or the like; a polymer selected from among polyacetal, polyamide, polyimide, polycarbonate, polyether ketone, polyaryl ether keton, polyetherimide, polyamide-imide, polybenimidazole, polyether sulfone, polyphenylene oxide, a cyclic olefin copolymer, polyphenylene sulfide, polyethylene naphthalate, glass fiber, Teflon, and polytetrafluoro ethylene; or a polymer film including (e.g., consisting of) a copolymer or mixture of two or more of the foregoing.

The organic material may include a polyvinylidene fluoride-based polymer or a (meta)acryl-based polymer.

The inorganic matter may include inorganic particles selected from among Al₂O₃, SiOz, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto.

The organic material and the inorganic material may be mixed in a single coating layer, or may exist in a laminated form of a coating layer including the organic material and a coating layer including the inorganic material.

The lithium secondary battery according to one or more embodiments may further include a solid electrolyte. Examples of the solid electrolyte may include an oxide-based solid electrolyte, a sulfide-based solid electrolyte, and/or a (e.g., any suitable) combination thereof.

The solid electrolyte may be, for example, an oxide-based solid electrolyte. The oxide-based solid electrolyte may include at least one selected from among Li_{1+x+y}AlₓTi₂₋ₓSi_{y}P_{3-y}O₁₂ (where 0<x<2 and 0≤y<3), Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂-ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M may be Te, Nb, or Zr, and x may be an integer from 1 to 10). The solid electrolyte may be prepared by a sintering method and/or the like. For example, the oxide-based solid electrolyte may include a garnet-type or kind (e.g., garnet) solid electrolyte selected from among Li₇La₃Zr₂O₁₂(LLZO) and Li₃₊ₓLa₃Zr₂₋ₐMₐO₁₂ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, and/or a (e.g., any suitable) combination thereof. Particles of the sulfide-based solid electrolyte may include Li₂S, P₂S₅, SiS₂, GeS₂, B₂S₃, and/or a (e.g., any suitable) combination thereof. The particles of the sulfide-based solid electrolyte particles may include Li₂S or P₂S₅. The particles of the sulfide-based solid electrolyte particles may have higher lithium ionic conductivity than other inorganic compounds. For example, the sulfide-based solid electrolyte may include Li₂S and P₂S₅. If the sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In one or more embodiments, an inorganic solid electrolyte prepared by adding Li₃PO₄, a halogen, a halogen compound, Li₂₊₂ₓZn₁₋ₓGeO₄ ("LISICON", where 0≤x<1), Li_{3+y}PO₄₋ₓNₓ ("LIPON")(where 0<x<4 and 0<y<3), Li_{3.25}Ge_{0.25}P_{0.75}S₄("ThioLISICON"), Li₂O-Al₂O₃-TiO₂-P₂O₅("LATP"), and/or the like to an inorganic solid electrolyte, such as Li₂S-P₂S₅, SiS₂, GeS₂, B₂S₃, and/or a (e.g., any suitable) combination thereof, may be used as the sulfide solid electrolyte. Non-limiting examples of the sulfide solid electrolyte material are: Li₂S-P₂S₅; Li₂S-P₂S₅-LiX (where X may be a halogen element); Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S -P₂S₅-ZₘSₙ (where 0<m<10, 0<n<10, and Z may be Ge, Zn, or Ga); Li₂S-GeS₂; Li₂S-SiS₂-Li₃PO₄; and Li₂S-SiS₂-LiₚMO_{q} (where 0<p<10, 0<q<10, and M may be P, Si, Ge, B, Al, Ga, or In). In this regard, the sulfide-based solid electrolyte material may be prepared by treating raw starting materials of the sulfide-based solid electrolyte material (e.g., Li₂S, P₂S₅, and/or the like) by a melt quenching method, a mechanical milling method, and/or the like. In one or more embodiments, a calcination process may be performed after the treatment. The sulfide-based solid electrolyte may be amorphous or crystalline, or may be in a mixed state.

### Lithium secondary battery

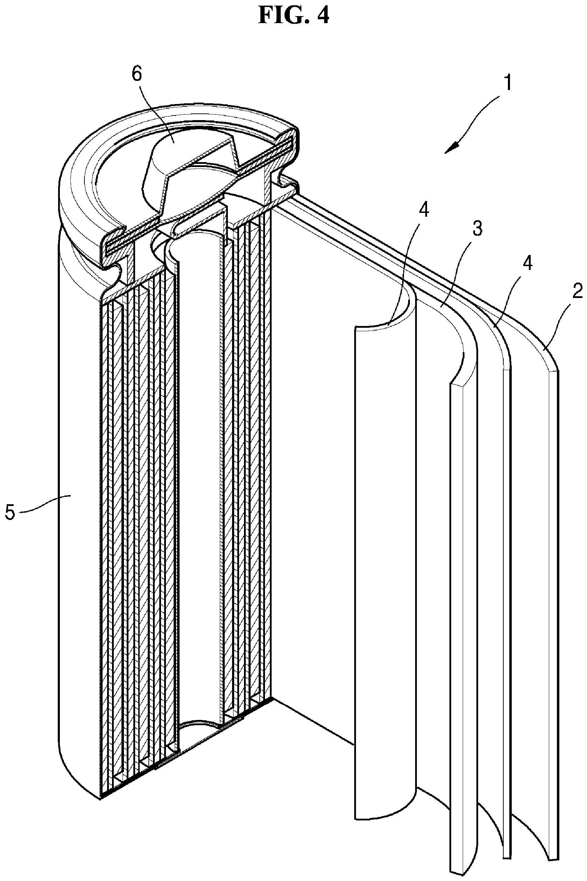

Referring to FIG. 4, a lithium secondary battery 1 according to one or more embodiments may include a cathode 3, an anode 2, and an electrolyte 4. A gel-type or kind polymer electrolyte may be arranged between the electrolyte 4 and the cathode 3. The cathode 3, the anode 2, and the electrolyte 4 may be wound or folded to form a battery structure. The formed battery structure may be accommodated in a battery case 5. Then, the battery case 5 may be filled with an organic electrolyte solution, and sealed with a cap assembly 6, thereby completing the manufacture of the lithium secondary battery 1. The battery case 5 may be a cylindrical-type or kind, but the shape of the battery case 5 is not limited thereto. For example, the battery case 5 may be a square-type or kind, a thin-film type or kind, and/or the like.

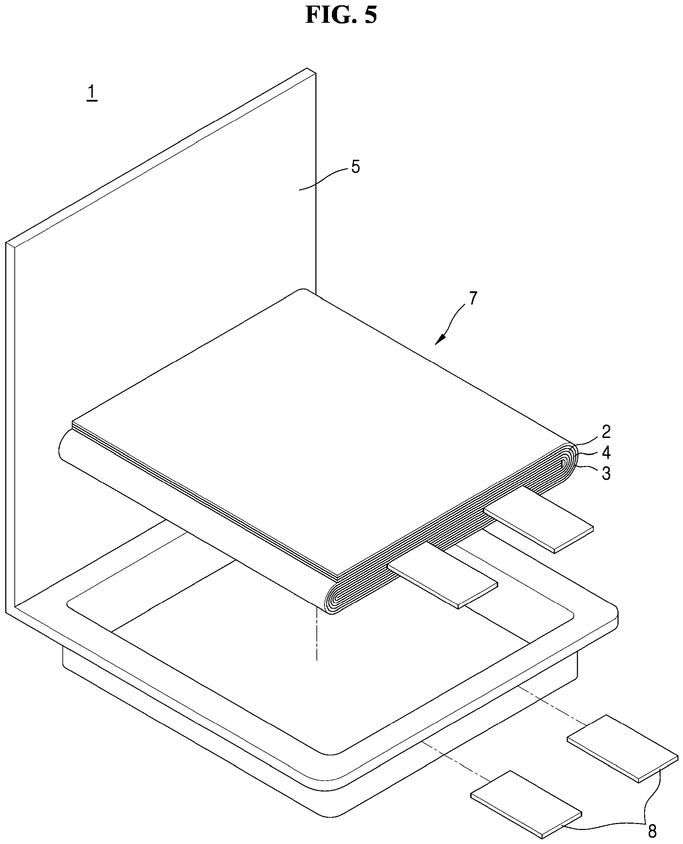

Referring to FIG. 5, the lithium secondary battery 1 according to one or more embodiments may include the cathode 3, the anode 2, and the separator 4. The separator 4 may be arranged between the cathode 3 and the anode 2, and the cathode 3, the anode 2, and the separator 4 may be wound or folded to form the battery structure 7. The formed battery structure 7 may be accommodated in a battery case 5. The lithium battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium secondary battery 1. The battery case 5 may be a square-type or kind, but the shape of the battery case 5 is not limited thereto. For example, the battery case 5 may be a cylindrical-type or kind, a thin-film type or kind, and/or the like.

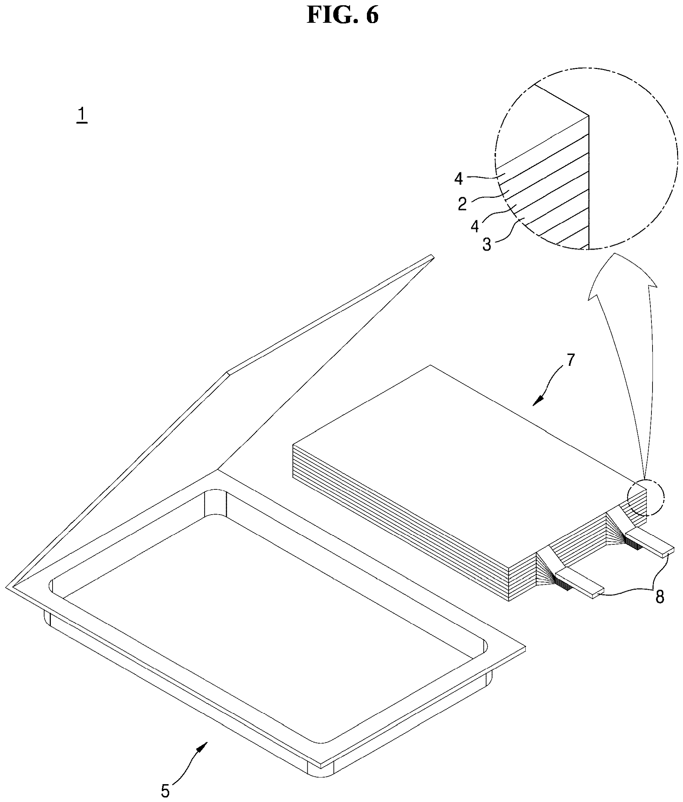

Referring to FIG. 6, the lithium metal battery 1 according to one or more embodiments may include the cathode 3, the anode 2, and the separator 4. The separator 4 may be arranged between the cathode 3 and the anode 2 to form the battery structure 7. A gel-type or kind polymer electrolyte between a separator and the cathode may be used in one or more embodiments. The battery structure 7 may be laminated in a bi-cell structure, and then accommodated in the battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium secondary battery 1. The battery case 5 may be a square-type or kind, but the shape of the battery case 5 is not limited thereto. For example, the battery case 5 may be a cylindrical-type or kind, a thin-film type or kind, and/or the like.

A pouch-type or kind lithium secondary battery corresponds to use of a pouch as a battery case for each of the lithium secondary batteries of FIGS. 5 and 6. A pouch-type or kind lithium secondary battery may include one or more battery structures. An electrolyte may be arranged between the cathode 3 and the anode 2, or an electrolyte and a separator may be arranged between the cathode 3 and the anode 2, thereby providing the battery structure 7. The battery structure 7 may be laminated as a bi-cell structure, impregnated with liquid electrolyte, and then accommodated and sealed in a pouch, thereby completing the manufacture of a pouch-type or kind lithium secondary battery. In one or more embodiments, the cathode 3, anode 2, and the separator 4 may be simply laminated in the form of an electrode assembly and then accommodated in a pouch, or may be wound or folded into a jelly roll-type or kind electrode assembly and then accommodated in a pouch. Then, after injecting an organic electrolyte solution into the pouch, and the pouch may be sealed, thereby completing the manufacture of the lithium secondary battery.

The lithium secondary battery of the present disclosure may have excellent or suitable discharge capacity and lifespan characteristics, and may also have high energy density, and thus may be, for example, used in an electric vehicle (EV). For example, the lithium metal battery may be used in a hybrid vehicle, such as a plug-in hybrid electric vehicle (PHEV) and/or the like. The lithium metal battery may also be applicable to the fields requiring high-power storage. For example, the lithium metal battery may be used in an electric bicycle, a power tool, and/or the like.

Multiple lithium ion batteries may be laminated to form a battery module, and multiple battery modules may form a battery pack. The battery pack may be used in a device that requires high capacity and large output. For example, the battery pack may be used in a laptop computer, a smart phone, an electronic vehicle, and/or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

### Preparation of lithium secondary battery

The lithium secondary battery according to one or more embodiments may be prepared by: preparing an anode including an anode current collector; preparing a separator; preparing a cathode; preparing a battery assembly by laminating the negative electrode, the separator, and the cathode; injecting, into the battery assembly, a composition for providing a gel polymer electrolyte including a crosslinkable monomer for providing a gel polymer and a liquid electrolyte; and heat treating it to form a gel polymer electrolyte.

In the lithium secondary battery according to one or more embodiments, a separator including the gel polymer electrolyte may be formed in situ by injecting a composition for providing a gel polymer electrolyte into a battery assembly and heat treating it, as described above. According to one or more embodiments, the lithium secondary battery may be prepared by separately manufacturing a separator including a gel polymer electrolyte to form a self-supporting film, placing it on the anode current collector, and placing the cathode thereon.

The lithium secondary battery may further include the separator.

The separator may include a gel-type or kind polymer electrolyte. The separator may also further include a liquid electrolyte.

The preparation method of the lithium secondary battery may further include providing a gel-type or kind polymer electrolyte.

The providing of the gel-type or kind polymer electrolyte may be performed by applying and heat-treating a composition for providing a gel-type or kind polymer electrolyte including acetonitrile and at least one selected from among a binder precursor and a binder on the anode current collector. Here, the binder precursor may include, for example, the first polymer and the second polymer, and the binder may refer to the binder described in connection with the aforementioned gel-type or kind polymer electrolyte.

To the composition for providing a gel-type or kind polymer electrolyte, a solvent such as N-methylpyrrolidone, dimethylformamide, and/or the like may be added. The amount of the solvent may be in a range of about 0.05 parts by weight to about 5 parts by weight, based on about 100 parts by weight of the total weight of acetonitrile and the binder.

The gel-type or kind polymer electrolyte may further include a lithium salt. The amount of the lithium salt may be in a range of about 30 parts by weight to about 80 parts by weight, about 40 parts by weight to about 60 parts by weight, or about 45 parts by weight to about 55 parts by weight, based on about 100 parts by weight of the total weight of the binder and the lithium salt.

The composition for providing a gel-type or kind polymer electrolyte may further include the second polymer having a functional group crosslinkable with the first polymer including a hydroxyl group. The gel-type or kind polymer electrolyte formed by using the composition for providing a gel-type or kind polymer electrolyte may further include a crosslinked polymer of the first polymer and the second polymer. The mixing ratio of the first polymer including a hydroxyl group to the second polymer may be adjusted to be in a range of about 50:50 to about 99:1, about 50:50 to about 99:10, or about 60:40 to about 90:10.

The second polymer may include at least one selected from among fluorinated polyamic acid and fluorinated polyimide, each including a carboxyl group.

If the second polymer is fluorinated polyamic acid including a carboxyl group, the composition for providing a gel-type or kind polymer electrolyte including the second polymer may be applied to the anode current collector, dried, and then heat-treated to carry out a cross-linking reaction between the first polymer and the second polymer, so as to form the gel-type or kind polymer electrolyte including a cross-linked polymer. The temperature at which the heat treatment is performed may vary depending on the compositions of the first polymer and the second polymer, but may be, for example, performed at a temperature in a range of about 80 °C to about 200 °C, about 100 °C to about 200 °C, about 150 °C to about 200 °C, or about 150 °C to about 190 °C.

Hereinafter, the present creative idea will be described in more detail through Examples and Comparative Examples. However, these examples are provided to represent the creative idea, and the scope of the present creative idea is not limited thereto.

### Preparation of gel polymer electrolyte and lithium secondary battery

### Example 1: Anode current collector/separator+gel polymer (GPE, DPHA/AD1700 (3/1) 4 %)+LE, LE (acetonitrile+ LiDFOB + LiBF₄)/cathode

For use as an anode current collector, a copper foil having a thickness of 10 about µm was prepared.

An about 20 µm-thick polyethylene single layer as a separator was laminated on copper foil, and a cathode was laminated on the other side of the separator, so as to prepare a laminate. A composition for providing a gel polymer electrolyte was injected into the prepared laminate and heat-treated at about 70 °C for about 120 minutes so that a lithium secondary battery in which a gel polymer electrolyte was formed in pores of the separator was prepared. As a result, the lithium secondary battery had a cathode/gel-type or kind polymer electrolyte (separator)/anode current collector structure. In the gel-type or kind polymer electrolyte, based on about 100 parts by weight of the gel polymer electrolyte, the amount of the gel polymer was about 4 parts by weight and the amount of the liquid electrolyte was about 96 parts by weight.

The composition for providing the gel polymer electrolyte was prepared by mixing crosslinkable monomers, such as dipentaerythritol hexaacrylate (DPHA) which is a six-functional cross-linking agent and Fluorolink AD1700 (MW: 1,500) supplied by Solvay Inc., a liquid electrolyte, and an initiator, such as about 240.30 g/mol of benzoin ethyl ether (by Sigma-Aldrich).

In the composition for providing the gel polymer electrolyte, based on about 100 parts by weight of the total weight of the composition, about 4 parts by weight of the crosslinkable monomers including DPHA and AD1700 at a weight ratio of about 3:1, about 96 parts by weight of the liquid electrolyte, and the initiator were included. Here, the initiator was used in the amount of about 5 parts by weight, based on about 100 parts by weight of the crosslinkable monomers.

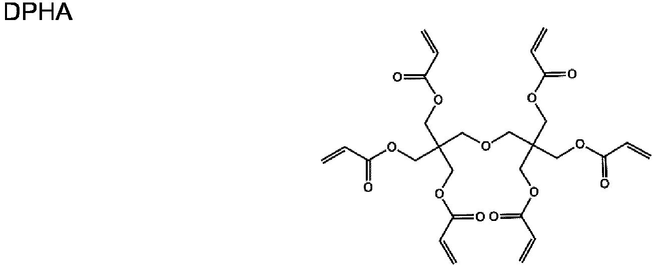

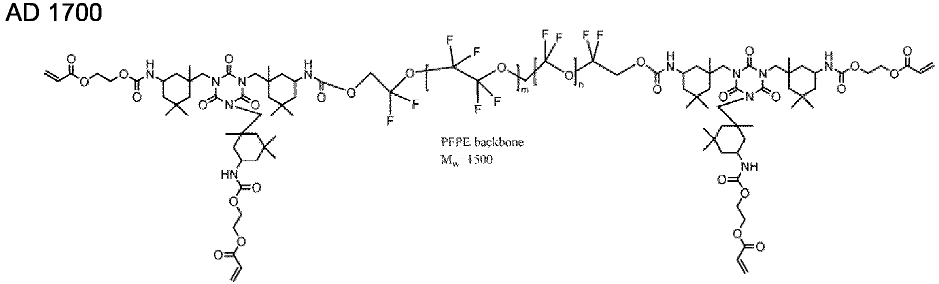

For use as the liquid electrolyte, a solution in which about 0.6 M of LiBF₄, about 0.6 M of lithium difluoro(oxalate)borate (LiDFOB), and acetonitrile were added to a mixed solvent containing diethyl carbonate (DEC) and fluoroethylene carbonate (FEC) at a volume ratio of about 2:1 was used. In the liquid electrolyte, based on (100 wt% of) the total weight of the liquid electrolyte, the amount of the acetonitrile was about 8.74 wt%, and the amount of the FEC was about 36.7 wt%.

The cathode was prepared as follows.

Li_{1.04}Ni_{0.88}Co_{0.1}Al_{0.02}O₂ powder and a carbon-based conductive material (Super-P; Timcal Ltd.) were mixed uniformly (e.g., substantially uniformly) in a weight ratio of about 90:5, and a polyvinylidene fluoride (PVDF) binder solution was added thereto, so as to prepare a cathode active material slurry in which the weight ratio of the active material:carbon-based conductive material:binder was about 90:5:5. The slurry thus prepared was applied onto an about 15 µm-thick-aluminum substrate by using a doctor blade, dried at about 120 °C under reduced pressure, and then rolled into a sheet form by using a roll press, so as to prepare a cathode.

In a lithium secondary battery thus prepared according to the processes above, a lithium precipitation layer was formed between the anode current collector and the separator.

### Example 2: Anode current collector/separator+GPE (DPHA/DRIC (3/1) 4 %)+ LE, LE (acetonitrile+ LiDFOB + LiBF₄)/cathode

A gel polymer electrolyte and a lithium secondary battery were prepared in substantially the same manner as in Example 1, except that, if preparing a composition for providing a gel polymer electrolyte, DRIC represented by Compound 1 was used instead of Fluorolink AD1700 (MW:1 ,500) supplied by Solvay Inc., together with DPHA which is a six-functional cross-linking agent serving as a crosslinkable monomer.

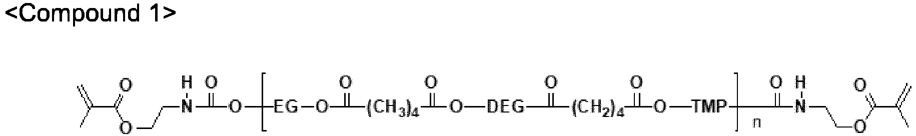

In Compound 1, n may be 5, EG may be an ethylene group, DEG may be diethylene glycol, and TMP may be trimethylolpropane.

### Example 3: GPE (DPHA/AD1700 (1/1) 4 %)+ LE, LE (acetonitrile+ LiDFOB + LiBF₄)

A gel polymer electrolyte and a lithium secondary battery were prepared in substantially the same manner as in Example 1, except that, if preparing a composition for providing a gel polymer electrolyte, the mixing weight ratio of DPHA to AD1700 was changed to about 1:1.

### Example 4: GPE (DPHA/DRIC(1/1) 4 %)+ LE, LE (acetonitrile+ LiDFOB + LiBF₄)

A gel polymer electrolyte and a lithium secondary battery were prepared in substantially the same manner as in Example 2, except that, if preparing a composition for providing a gel polymer electrolyte, the mixing weight ratio of DPHA to DRIC was changed to about 1:1.

### Example 5: GPE (DPHA/AD1700(3/1) 8 %)+ LE, LE (acetonitrile+ LiDFOB + LiBF₄)

A gel polymer electrolyte and a lithium secondary battery were prepared in substantially the same manner as in Example 1, except that, if preparing a composition for providing a gel polymer electrolyte, the total amount of DPHA and AD1700 was changed to about 8 wt% based on the total weight of the composition for providing a gel polymer electrolyte.

### Example 6: GPE (TMPTMA/AD1700(3/1) 8 %)+ LE, LE (acetonitrile+ LiDFOB + LiBF₄)

A gel polymer electrolyte and a lithium secondary battery were prepared in substantially the same manner as in Example 1, except that, if preparing a composition for providing a gel polymer electrolyte, TMPTMA was used instead of DPHA.

### Comparative Example 1: Anode current collector/separator+GPE (DPHA/AD1700 (3/1) 4 %)+LE (LiDFOB+LiBF₄, acetonitrile-free)/cathode

A gel polymer electrolyte and a lithium secondary battery were prepared in substantially the same manner as in Example 1, except that, if preparing a liquid electrolyte for providing a gel polymer electrolyte, acetonitrile was not used.

### Comparative Example 2: Anode current collector/separator+GPE (DPHA 4 %)+LE (LiDFOB+LiBF₄, acetonitrile-free)/cathode

A gel polymer electrolyte and a lithium secondary battery were prepared in substantially the same manner as in Example 1, except that, if preparing the composition for providing a gel polymer electrolyte, only DPHA was used as a crosslinkable monomer instead of the combination of DPHA and AD1700.

### Comparative Example 3: Anode current collector/separator+GPE (EG-DMA/AD1700(3/1) 4%)+LE, LE (acetonitrile+LiDFOB+LiBF₄)/cathode

A gel polymer electrolyte and a lithium secondary battery were prepared in substantially the same manner as in Example 1, except that, if preparing the composition for providing a gel polymer electrolyte, ethyleneglycol dimethacrylate (EG-DMA) and AD1700 were used as crosslinkable monomers instead of the combination of DPHA and AD1700.

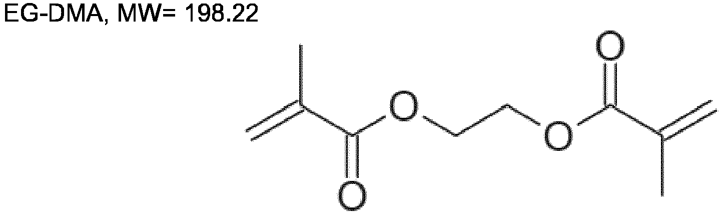

### Comparative Example 4: Anode current collector/separator+GPE (EG-DMA 4 %)+LE (acetonitrile+ LiDFOB + LiBF₄)/cathode

A gel polymer electrolyte and a lithium secondary battery were prepared in substantially the same manner as in Example 1, except that, if preparing the composition for providing a gel polymer electrolyte, only EG-DMA was used as a crosslinkable monomer instead of the combination of DPHA and AD1700.

### Comparative Example 5: Anode current collector/separator+GPE (AD1700 4 %)+LE (acetonitrile+ LiDFOB + LiBF₄)/cathode

A gel polymer electrolyte and a lithium secondary battery were prepared in substantially the same manner as in Example 1, except that, if preparing the composition for providing a gel polymer electrolyte, only AD1700 was used as a crosslinkable monomer instead of the combination of DPHA and AD1700.

### Evaluation Example 1: Lifespan at high temperature (45 °C)

The charging/discharging characteristics for the lithium secondary batteries of Examples 1 to 6 and Comparative Examples 1 to 5 were evaluated under the following conditions.

Each lithium secondary battery was charged with a constant current of about 0.1 C rate at about 45 °C until a voltage reached about 4.3 V (vs. Li), and was then cut-off at a current of about 0.05 C rate while maintaining the voltage at about 4.3 V in a constant voltage mode. Subsequently, each lithium secondary battery was discharged with a constant current of about 0.1 C rate until the voltage reached about 3.6 V (vs. Li) during discharging (formation cycle).

Each lithium secondary battery having undergone the formation cycle was charged with a constant current of about 0.2 C rate at about 45 °C until the voltage reached about 4.3 V (vs. Li), and was then cut-off at a current of about 0.05 C rate while maintaining the voltage at about 4.3 V in a constant voltage mode. Subsequently, each lithium metal battery was discharged with a constant current of about 0.5 C rate until the voltage reached about 3.6 V (vs. Li) during discharging (1st cycle). This cycle was repeated until the 160^{th} cycle under the same conditions.

In all charging and discharging cycles, a 10-minute stop time was provided after every one charging and discharging cycle. Some of the results of the charging/discharging test at high temperature are shown in Table 1.

**Table 1**

| Division | Condition | Number of cycles (n) @80 % |
|---|---|---|
| Example 1 | GPE (gelpolymer(DPHA/AD1700(3/1)) 4 %)+LE, LE (acetonitrile+LiDFOB+LiBF₄) | 231 |
| Example 2 | GPE (gelpolymer(DPHA/DRIC(3/1)) 4 %)+LE, LE (acetonitrile+LiDFOB+LiBF₄) | 229 |
| Example 3 | GPE (gelpolymer(DPHA/AD1700(1/1)) 4 %)+ LE, LE (acetonitrile+ LiDFOB + LiBF₄) | 223 |
| Example 4 | GPE (gelpolymer(DPHA/DRIC(1/1)) 4 %)+ LE, LE (acetonitrile+ LiDFOB + LiBF₄) | 219 |
| Example 5 | GPE (gelpolymer(DPHA/AD1700(3/1)) 8 %)+ LE, LE(acetonitrile+ LiDFOB + LiBF₄) | 206 |
| Example 6 | GPE (gelpolymer(TMPTMA/AD1700(3/1)) 4 %)+ LE, LE (acetonitrile+ LiDFOB + LiBF₄) | 184 |
| Comparative Example 1 | GPE (gelpolymer(DPHA/AD1700(3/1)) 4 %)+ LE(LiDFOB + LiBF₄, acetonitrile-free) | 120 |
| Comparative Example 2 | GPE (gelpolymer(DPHA) 4 %)+ LE (LiDFOB + LiBF₄, acetonitrile-free) | 125 |
| Comparative Example 3 | GPE (gelpolymer(EG-DMA/AD1700(3/1)) 4 %)+ LE, LE (acetonitrile+ LiDFOB + LiBF₄) | 145 |
| Comparative Example 4 | GPE (gelpolymer(EG-DMA) 4 %)+ LE, LE (acetonitrile+ LiDFOB + LiBF₄) | 53 |
| Comparative Example 5 | GPE (gelpolymer(AD1700) 4 %)+ LE, LE (acetonitrile+ LiDFOB + LiBF₄) | No gel formed |

### Evaluation Example 2: High-rate characteristics

Each of the lithium secondary batteries prepared in Examples 1 to 6 and Comparative Examples 1 to 4 was charged with a constant current of about 0.1 C rate at about 45 °C until a voltage reached about 4.3 voltage (V) (vs. Li), and was then cut-off at a current of about 0.05 C rate while maintaining the voltage at about 4.3 V in a constant voltage mode. Subsequently, each lithium secondary battery was discharged with a constant current of about 0.1 C rate until the voltage reached about 3.6 V (vs. Li) during discharging (formation cycle).

Each lithium secondary battery having undergone the formation cycle was charged with a constant current of about 0.2 C rate at about 45 °C until the voltage reached about 4.3 V (vs. Li), and was then cut-off at a current of about 0.05 C rate while maintaining the voltage at 4.3 V in a constant voltage mode. Subsequently, each lithium secondary battery was discharged with a constant current of about 0.2 C rate until the voltage reached about 3.6 V (vs. Li) during discharging (1^{st} cycle), and charged and discharged 4 times in substantially the same manner. After discharging at rate of about 0.2 C a total of 5 times, the capacity obtained at the third cycle was used as the result.

The 1^{st} cycle was repeated until the 3^{rd} cycle under the same conditions.

The lithium secondary batteries that have undergone the 3^{rd} cycle were charged with in a constant current mode at a current rate of about 0.2 C at about 45 °C until the voltage reached about 4.3 V (vs. Li), and then, while maintaining the voltage of about 4.3 V in the constant voltage mode, the voltage was cut-off at a current rate of about 0.05 C. Subsequently, the batteries were discharged at a constant current rate of about 0.5 C until the voltage reached about 2.8 V (vs. Li) (4^{th} cycle).

The 4^{th} cycle was repeated until the 8^{th} cycle under the same conditions.

The lithium secondary batteries that have undergone the 8^{th} cycle were charged with in a constant current mode at a current rate of about 0.33 C at about 45 °C until the voltage reached about 4.3 V (vs. Li), and then, while maintaining the voltage of 4.3 V in the constant voltage mode, the voltage was cut-off at a current rate of about 0.05 C. Subsequently, the batteries were discharged at a constant current rate of about 1 C until the voltage reached about 2.8 V (vs. Li) (9^{th} cycle).

The 9^{th} cycle was repeated until the 13^{th} cycle under the same conditions.

The lithium secondary batteries that have undergone the 13^{th} cycle were charged with in a constant current mode at a current rate of about 0.33 C at about 45 °C until the voltage reached about 4.3 V (vs. Li), and then, while maintaining the voltage of about 4.3 V in the constant voltage mode, the voltage was cut-off at a current rate of about 0.05 C. Subsequently, the batteries were discharged at a constant current rate of about 2 C until the voltage reached about 2.8 V (vs. Li) (14^{th} cycle).

The 14^{th} cycle was repeated until the 18^{th} cycle under the same conditions.

The lithium secondary batteries that have undergone the 18^{th} cycle were charged with in a constant current mode at a current rate of about 0.33 C at about 45 °C until the voltage reached about 4.3 V (vs. Li), and then, while maintaining the voltage of about 4.3 V in the constant voltage mode, the voltage was cut-off at a current rate of about 0.05 C. Subsequently, the batteries were discharged at a constant current rate of about 3 C until the voltage reached about 2.8 V (vs. Li) (19^{th} cycle).

The 19^{th} cycle was repeated until the 23^{th} cycle under the same conditions.

The lithium secondary batteries that have undergone the 23^{th} cycle were charged with in a constant current mode at a current rate of about 0.33 C at about 45 °C until the voltage reached about 4.3 V (vs. Li), and then, while maintaining the voltage of about 4.3 V in the constant voltage mode, the voltage was cut-off at a current rate of about 0.05 C. Subsequently, the batteries were discharged at a constant current rate of about 0.2 C until the voltage reached about 2.8 V (vs. Li) (24^{th} cycle).

The lithium secondary batteries that have undergone the 24^{th} cycle were charged with in a constant current mode at a current rate of about 0.33 C at about 45 °C until the voltage reached about 4.3 V (vs. Li), and then, while maintaining the voltage of about 4.3 V in the constant voltage mode, the voltage was cut-off at a current rate of about 0.05 C. Subsequently, the batteries were discharged at a constant current rate of about 0.5 C until the voltage reached about 2.8 V (vs. Li) (25^{th} cycle).

The 25^{th} cycle was repeated until the 30^{th} cycle under the same conditions.

After every one charge/discharge cycle in all the charge/discharge cycles, there was an about 10-minute pause time.

Some of the results of the charge/discharge test are shown in Table 2.

The high-rate characteristics were defined by Equation 2: High-rate characteristics [%]=[Discharge capacity at 3 C rate / discharge capacity at 0.2 C rate)] × 100

**Table 2**

| Division | Condition | High-rate characteristics (%) |
|---|---|---|
| Example 1 | GPE (gelpolymer(DPHA/AD1700(3/1) 4 %)+ LE, LE (acetonitrile+ LiDFOB + LiBF₄) | 47.2 |
| Example 2 | GPE (gelpolymer(DPHA/DRIC(3/1) 4 %)+ LE, LE (acetonitrile+ LiDFOB + LiBF₄) | 44.2 |
| Example 3 | GPE (gelpolymer(DPHA/AD1700(1/1) 4 %)+ LE, LE (acetonitrile+ LiDFOB + LiBF₄) | 46.8 |
| Example 4 | GPE (gelpolymer(DPHA/DRIC(1/1) 4 %)+ LE, LE (acetonitrile+ LiDFOB + LiBF₄) | 44.0 |
| Example 5 | GPE (gelpolymer(DPHA/AD1700(3/1) 8 %)+ LE, LE(acetonitrile+ LiDFOB + LiBF₄) | 46.6 |
| Example 6 | GPE (gelpolymer(TMPTMA/AD1700(3/1) 4 %)+ LE, LE (acetonitrile+ LiDFOB + LiBF₄) | 42.9 |
| Comparativ e Example 1 | GPE (gelpolymer(DPHA/AD1700(3/1) 4 %)+ LE(LiDFOB + LiBF₄, acetonitrile-free) | 32.2 |
| Comparativ e Example 2 | GPE (gelpolymer(DPHA) 4 %)+ LE (LiDFOB + LiBF₄, acetonitrile-free) | 31.9 |
| Comparativ e Example 3 | GPE (gelpolymer(EG-DMA) 4 %)+ LE, LE (acetonitrile+ LiDFOB + LiBF₄) | 35.7 |
| Comparativ e Example 4 | GPE (gelpolymer(EG-DMA) 4 %)+ LE, LE (acetonitrile+ LiDFOB + LiBF₄) | 35.5 |

In the lithium secondary batteries of Examples 1 to 6, if more anions interacted with the polymer chain, t+ increased, and if Li moved between oxygen atoms (O) within the chain, the binding energy decreased so that Li ions could move fast, thereby improving the high-rate characteristics.

### Evaluation Example 3: Ion conductivity

The ion conductivity of the gel polymer electrolytes in the lithium secondary batteries of Examples 1 to 6 and Comparative Examples 1 to 4 was examined, and the results are shown in Table 3. The ion conductivity was measured by applying a voltage bias of about 10 mV to the gel polymer electrolyte within a frequency range of about 1 Hz to about 1 MHz while scanning the temperatures.

**Table 3**

| Division | Condition | Ion conductivity at room temperature (mS/cm) | Ion conductivity at high temperature (mS/cm) |
|---|---|---|---|
| Example 1 | GPE (gelpolymer(DPHA/AD1700( 3/1) 4 %)+ LE, LE (acetonitrile+ LiDFOB + LiBF₄) | 0.43 | 0.61 |
| Example 2 | GPE (gelpolymer(DPHA/DRIC(3/1 ) 4 %)+ LE, LE (acetonitrile+ LiDFOB + LiBF₄) | 0.39 | 0.56 |
| Example 3 | GPE (gelpolymer(DPHA/AD1700( 1/1) 4 %)+ LE, LE (acetonitrile+ LiDFOB + LiBF₄) | 0.42 | 0.59 |
| Example 4 | GPE (gelpolymer(DPHA/DRIC(1/1 ) 4 %)+ LE, LE (acetonitrile+ LiDFOB + LiBF₄) | 0.38 | 0.56 |
| Example 5 | GPE (gelpolymer(DPHA/AD1700( 3/1) 8 %)+ LE, LE(acetonitrile+ LiDFOB + LiBF₄) | 0.42 | 0.61 |
| Example 6 | GPE (gelpolymer(TMPTMA/AD17 00(3/1) 4 %)+ LE, LE (acetonitrile+ LiDFOB + LiBF₄) | 0.36 | 0.53 |
| Compar ative Example 1 | GPE (gelpolymer(DPHA/AD1700( 3/1) 4 %)+ LE(LiDFOB + LiBF₄, acetonitrile-free) | 0.31 | 0.46 |
| Compar ative Example 2 | GPE (gelpolymer(DPHA) 4 %)+ LE (LiDFOB + LiBF₄, acetonitrile-free) | 0.31 | 0.44 |
| Compar ative Example 3 | GPE (gelpolymer(EG-DMA) 4 %)+ LE, LE (acetonitrile+ LiDFOB + LiBF₄) | 0.26 | 0.37 |
| Compar ative Example 4 | GPE (gelpolymer(EG-DMA) 4 %)+ LE, LE (acetonitrile+ LiDFOB + LiBF₄) | 0.25 | 0.37 |

As shown in Table 3, it was confirmed that the gel polymer electrolytes of Examples 1 to 6 had high ion conductivity at room temperature and high temperature compared to the gel polymer electrolytes of Comparative Examples 1 to 4.

### Evaluation Example 4: Scanning electron microscopy

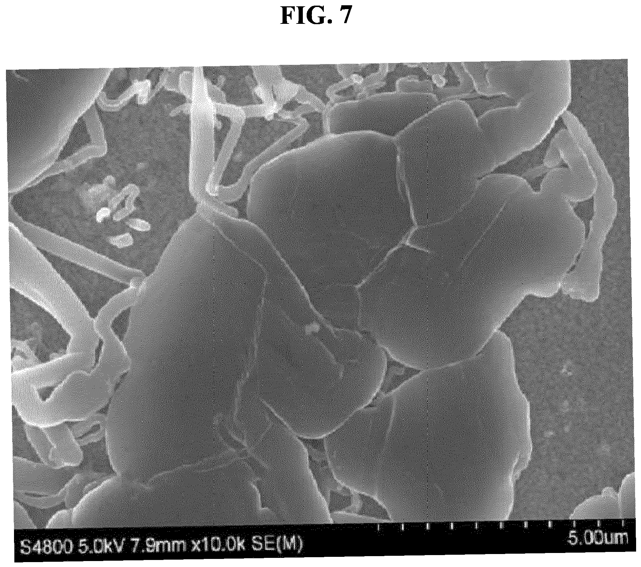

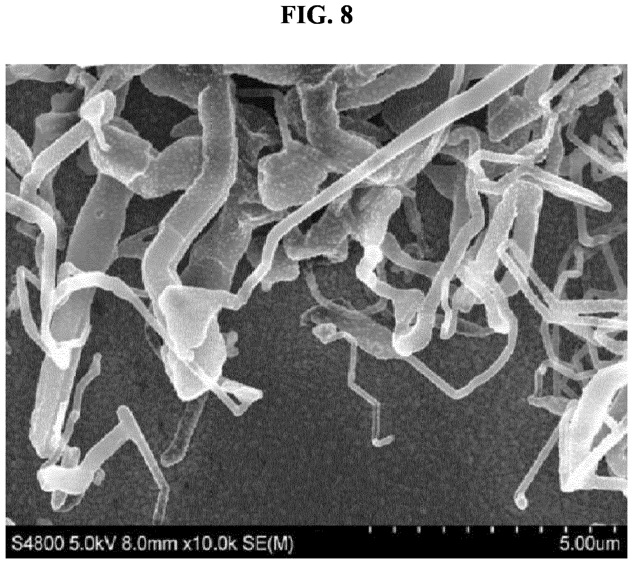

Scanning electron microscopy was performed on the gel polymer electrolytes prepared in Example 1 and Comparative Example 1. The scanning electron microscopy results are shown in FIGS. 7 and 8.

Referring to FIG. 7, the lithium transfer occurred only through the polymer chain in the gel polymer electrolyte of Example 1 due to the inclusion of the acetonitrile, enabling substantially uniform supply of lithium compared to the gel polymer electrolyte of Comparative Example 1.

According to the one or more embodiments, a material that transfers cations and anions of lithium to a polymer chain is included to concentrate distribution of the lithium ions in the polymer chain so that a gel polymer electrolyte for a lithium secondary battery having improved mobility of the lithium ions in the chain and a lithium secondary battery having excellent or suitable high-rate and long lifespan characteristics by using the gel polymer electrolyte are provided.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

In the context of the present application and unless otherwise defined, the terms "use," "using," and "used" may be considered synonymous with the terms "utilize," "utilizing," and "utilized," respectively. Further, the use of "may" when describing embodiments of the present invention refers to "one or more embodiments of the present invention."

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A gel polymer electrolyte comprising:
a gel polymer; and
a liquid electrolyte,
wherein the gel polymer is:
i) a crosslinked product of a multifunctional acryl-based monomer having three or more polymerizable functional groups; or
ii) a crosslinked product of a first polymerizable monomer and a second polymerizable monomer, the first polymerizable monomer being a multifunctional acryl-based monomer having three or more polymerizable functional groups, and the second polymerizable monomer being at least one selected from among a urethane acryl-based monomer having two or more polymerizable functional groups and a polymerizable monomer comprising a perfluoropolyether (PFPE) unit and having two or more polymerizable functional groups, and
wherein the liquid electrolyte comprises a lithium salt, an organic solvent, and acetonitrile, and
wherein the gel polymer electrolyte (31) is for a lithium secondary battery (1).

2. The gel polymer electrolyte (31) as claimed in claim 1, wherein an amount of the acetonitrile is in a range of 2 wt% to 30 wt%, based on 100 wt% of a total weight of the liquid electrolyte.

3. The gel polymer electrolyte (31) as claimed in any one of claims 1 or 2, wherein a concentration of the lithium salt is in a range of 0.1 M to 5 M.

4. The gel polymer electrolyte (31) as claimed in any one of claims 1 to 3, wherein the lithium salt comprises lithium difluoro(oxalato)borate (LiDFOB) and lithium tetrafluoroborate (LiBF₄), preferably wherein a mixing ratio of the LiDFOB to the LiBF₄ is in a range of 1:2 to 1:0.3.

5. The gel polymer electrolyte (31) as claimed in any one of claims 1 to 4, wherein
the organic solvent comprises a carbonate-based compound, and
the carbonate-based compound comprises fluoroethylene carbonate (FEC) and diethyl carbonate (DEC), preferably wherein a mixing ratio of the FEC to the DEC is in a range of 1:10 to 1:1.

6. The gel polymer electrolyte (31) as claimed in any one of claims 1 to 5, wherein the multifunctional acryl-based monomer, having three or more polymerizable functional groups, is pentaerythritol tetraacrylate, pentaerythritol tetramethaacrylate, trimethylolpropane triacrylate, trimethylolpropane trimethaacrylate (TMPTMA), propoxylated(3) trimethylolpropane triacrylate (PO(3)TMPTA), propoxylated(6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl)isocyanurate (THEICTA), dipentaerythritol pentaacrylate (DPEPA), dipentaerythritol hexaacrylate (DPHA), or a combination thereof.

7. The gel polymer electrolyte (31) as claimed in any one of claims 1 to 6, wherein
the urethane acryl-based monomer having two or more functional groups comprises two or more units each represented by Formula 1, and
the polymerizable monomer comprising a PFPE unit and having two or more polymerizable functional groups comprises a unit represented by Formula 2 and three or more units each represented by Formula 3: 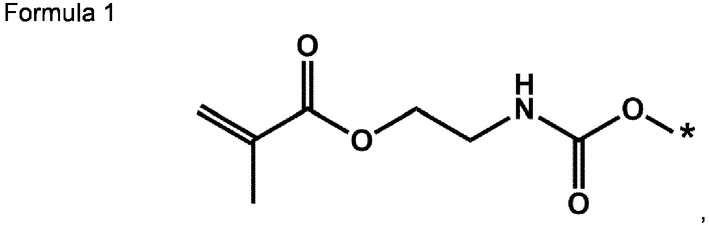
wherein in Formula 1,
* indicates a binding site to an adjacent atom, 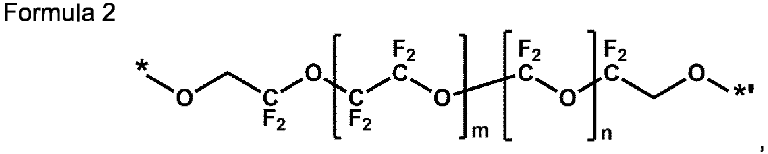
wherein in Formula 2,
* and *' each indicate a binding site to an adjacent atom,
m and n are each greater than 0, and the sum of m and n is in a range of 2 to 300, and 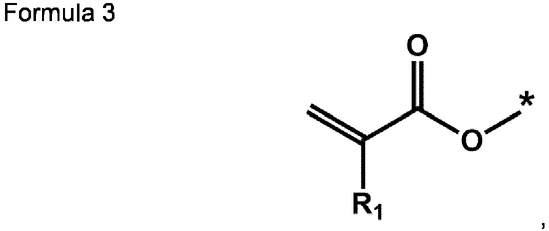 and
wherein, in Formula 3,
R₁ is hydrogen or a C₁-C₆ alkyl group, and
* indicates a binding site to an adjacent atom.

8. The gel polymer electrolyte (31) as claimed in any one of claims 1 to 7, wherein
an amount of the liquid electrolyte is in a range of 88 wt% to 99 wt%, based on 100 parts by weight of a total weight of the gel polymer electrolyte (31), and
an amount of the gel polymer is in a range of 1 wt% to 12 wt%, based on 100 parts by weight of the total weight of the gel polymer electrolyte (31).

9. A lithium secondary battery (1) comprising:
an anode (20) comprising an anode current collector (21);
a cathode; and
an electrolyte arranged between the cathode and the anode (20),
wherein the electrolyte comprises the gel polymer electrolyte (31) of any one of claims 1 to 8.

10. The lithium secondary battery (1) as claimed in claim 9, the anode (20) further comprises a lithium metal layer arranged on the anode current collector (21),
preferably wherein the lithium metal layer comprises lithium metal foil, lithium metal powder, lithium alloy foil, lithium alloy powder, or a combination thereof,
wherein preferably the lithium alloy of the lithium alloy foil or the lithium alloy powder comprises lithium and a first metal, and
wherein the first metal comprises indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

11. The lithium secondary battery (1) as claimed in any one of claims 9 or 10, further comprising a separator (30).

12. The lithium secondary battery (1) as claimed in any one of claims 9 to 11, wherein the anode (20) further comprises an anode active material layer between the anode current collector (21) and the electrolyte.

13. The lithium secondary battery (1) as claimed in any one of claims 9 to 12, wherein the anode active material layer comprises: a carbon-based compound; a mixture of a carbon-based material and at least one first metal; a composite of a carbon-based material and at least one first metal; or a combination thereof,
preferably wherein the carbon-based material comprises amorphous carbon, the amorphous carbon has an average particle diameter in a range of 10 nm to 100 nm, and
the carbon-based material comprises carbon black, carbon nanotubes, carbon nanofibers, fullerene, activated carbon, carbon fibers, or a combination thereof.

14. The lithium secondary battery (1) as claimed in any one of claims 9 to 13, wherein the at least one first metal comprises indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

15. The lithium metal battery as claimed in any one of claims 9 to 14, wherein
the cathode comprises a cathode current collector (11) and a cathode active material layer (12),
at least one of the cathode current collector (11) and the anode current collector (21) comprises a base film and a metal layer arranged on one side or both sides of the base film,
the base film comprises a polymer,
the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
